# EUROPEAN PATENT SPECIFICATION

(11) **EP 3 670 551 B1**
(45) Date of publication and mention of the grant of the patent: **13.05.2026**
(21) Application number: 20157213.8
(22) Date of filing: 02.02.2012
(51) Int. Cl.: C08F 236/04, B60C 1/00, C08K 3/04, C08L 9/00, C08F 236/06, C08L 7/00, C08L 15/00, C08L 101/00

(54) **COPOLYMER, RUBBER COMPOSITION, RUBBER COMPOSITION FOR TIRE SIDE USE, CROSSLINKED RUBBER COMPOSITION AND TIRE**
COPOLYMER, KAUTSCHUKZUSAMMENSETZUNG, KAUTSCHUKZUSAMMENSETZUNG ZUR VERWENDUNG IN REIFEN, VERNETZTE KAUTSCHUKZUSAMMENSETZUNG UND REIFEN
COPOLYMÈRE, COMPOSITION DE CAOUTCHOUC, COMPOSITION DE CAOUTCHOUC À UTILISER SUR LE FLANC D'UN PNEUMATIQUE, COMPOSITION DE CAOUTCHOUC RÉTICULÉE ET PNEUMATIQUE

(30) Priority: 04.02.2011 JP 2011023401; 01.03.2011 JP 2011044528
(43) Date of publication of application: 24.06.2020
(62) Divisional of application: 12742203.8
(73) Proprietor: Bridgestone Corporation, Chuo-Ku Tokyo 104-8340 (JP)
(72) Inventor: HORIKAWA, Yasuo, Tokyo, 187-8531 (JP); KAITA, Shojiro, Tokyo, 187-8531 (JP); TARDIF, Olivier, Tokyo, 187-8531 (JP); MATSUSHITA, Junko, Tokyo, 187-8531 (JP)
(74) Representative: Marks & Clerk LLP

(56) References cited:
- EP-A1- 2 463 313
- EP-A1- 2 599 803
- EP-A1- 2 599 804
- EP-A1- 2 599 809
- WO-A1-2009/148140
- JP-A- 2000 256 423
- JP-A- 2008 280 384
- JP-A- H0 312 433
- JP-A- H05 179 068
- JP-A- H08 259 733
- US-A- 4 616 685
- "rubber chemistry", vol. 3, 1 January 2007, article MATADOR RUBBER: "rubber chemistry", XP055699680
- "IARC Monographs on the Evaluation of Carcinogenic Risks to Humans - Volume 93 (2010)", vol. 3, 1 January 2010, IARC Working Group in Lyon, 7-14 February 2006, ISBN: 978-92-8-321293-5, article IARC: "CARBON BLACK, TITANIUM DIOXIDE AND TALC", pages: 43 - 49, XP055699696

## Description

The present application is a divisional application of European patent application no. 12742203.8.

### TECHNICAL FIELD

The present invention relates to a rubber composition comprising a copolymer of a conjugated diene compound and a non-conjugated olefin (a conjugated diene compound/non-conjugated olefin copolymer), a rubber composition for tire side use, a crosslinked rubber composition and a tire, and in particular, to a rubber composition comprising a copolymer of a conjugated diene compound and a non-conjugated olefin used for manufacturing a rubber with low heat generation properties and excellent in heat resistance, ozone resistance (weather resistance) as well as crack growth resistance, a rubber composition for tire side use using the rubber composition for tire sidewall members, a crosslinked rubber composition obtained by crosslinking the rubber composition, and a tire using the rubber composition or the crosslinked rubber composition.

### BACKGROUND ART

At least two different monomers can be polymerized in the same polymerization system so as to generate a copolymer having those different monomer units arranged as repeating units in one polymer chain. However, no report has been made on the content of 1,2 adduct units (including 3,4 adduct units) of the conjugated diene compound unit in a copolymer obtained by polymerization reaction of a conjugated diene compound and a non-conjugated olefin (the content of 1,2 adduct units (including 3,4 adduct units) of the conjugated diene compound in a unit derived from the conjugated diene compound).

For example, JP 2000-154210 A (PTL 1) discloses a catalyst for polymerizing conjugated dienes that contains a transition metal compound of group IV of the periodic table having a cyclopentadiene ring structure. PTL 1 discloses α-olefins such as ethylene as monomers which can be copolymerized with a conjugated diene. PTL 1, however, does not at all refer to the content of 1,2 adduct units (including 3,4 adduct units) of the conjugated diene compound unit in a copolymer, and there is no teaching or suggestion that a rubber composition with low heat generation properties and excellent in heat resistance and ozone resistance (weather resistance) may be obtained by controlling the content of 1,2 adduct units (including 3,4 adduct units) to be 5 % or less.
In addition, JP 2006-249442 A (PTL 2) discloses a catalyst for polymerizing olefins that is composed of a transition metal compound such as a titanium compound and a co-catalyst. PTL 2 also discloses a copolymer of an α-olefin and a conjugated diene compound. PTL 2, however, does not at all refer to the content of 1,2 adduct units (including 3,4 adduct units) of the conjugated diene compound unit in the copolymer, and there is no teaching or suggestion that a rubber composition with low heat generation properties and excellent in heat resistance and ozone resistance (weather resistance) may be obtained by controlling the content of 1,2 adduct units (including 3,4 adduct units) to be 5 % or less.
Further, JP 2006-503141 A (PTL 3) discloses a copolymer of ethylene and butadiene that is obtained by synthesizing ethylene and butadiene as a starting material by means of a special organic metal complex as a catalytic component. However, PTL 3 merely refers to the fact that butadiene, a monomer, is inserted into the copolymer in the form of transformer-1,2-cyclohexane and does not at all refer to the content of 1,2 adduct units (including 3,4 adduct units) of the conjugated diene compound unit in the copolymer. There is no teaching or suggestion that a rubber composition with low heat generation properties and excellent in heat resistance and ozone resistance (weather resistance) may be obtained by controlling the content of 1,2 adduct units (including 3,4 adduct units) to be 5 % or less.

In addition, JP 11-228743 A (PTL 4) discloses an olefin-rich, olefin-diene copolymer. PTL 4 discloses an unsaturated elastomer composition that is composed of an unsaturated olefin-based copolymer and rubber and used for obtaining a vulcanizate excellent in heat resistance and so on. PTL 4 also refers to a ratio of the double bonds in the side chain derived from 1,2 adduct units (including 3,4 adduct units) to the double bonds in the main chain derived from 1,4 adduct units. PTL 4, however, fails to provide any teaching or suggestion of the cis content and vinyl content of the olefin-diene copolymer, or the use of a copolymer containing 1,2 adduct units (including 3,4 adduct units) of the conjugated diene compound unit in an amount of 5 % or less. Moreover, PTL 4 does not provide any teaching or suggestion that a rubber composition with low heat generation properties and excellent in heat resistance and ozone resistance (weather resistance) may be obtained by controlling the content of 1,2 adduct units (including 3,4 adduct units) to be the content 5 % or less.

In addition, JP 2000-086857 A (PTL 5) discloses a butadiene polymer that has a vinyl content (vinyl bond content) of 6%, a cis content % of 92 % and an ethylene content of 3 % or 9 %, and that is used for obtaining a rubber composition excellent in low temperature rebound resilience and so on. PTL 5, however, does not provide any teaching or suggestion that a rubber composition with low heat generation properties and excellent in heat resistance and ozone resistance (weather resistance) is obtained by using a copolymer in which the content of 1,2 adduct units (including 3,4 adduct units) of the conjugated diene compound unit is 5 % or less.

Furthermore, JP 2000-154279 A (PTL 6) discloses a conjugated diene-based rubber composition that contains a conjugated diene-based polymer segment having a cis content % of 40 % or more and that is used for obtaining a rubber composition excellent in low temperature rebound resilience and so on. PTL 6 also discloses examples of polybutadiene having a 1,2-vinyl bond content of 90 %. Moreover, PTL 6 discloses a rubber composition containing: a butadiene-ethylene block copolymer having a cis content of 92 % and ethylene segments in an amount of 4.8 mass% of the total; polybutadiene having a cis content of 95.2 % and a vinyl content of 2.5 %; and carbon black N220. PTL 6, however, does not provide any teaching or suggestion that a rubber composition with low heat generation properties and excellent in heat resistance and ozone resistance (weather resistance) may be obtained by using a copolymer in which the content of 1,2 adduct units (including 3,4 adduct units) of the conjugated diene compound unit is 5 % or less.

Additionally, in response to increasing social demands for energy and resource saving, there is an increasing need for a rubber material that is excellent in weather resistance and crack growth resistance to meet the requirements for improving durability of tires in order to reduce fuel consumption of automobiles. In addition, in view of the recent surge in price of butadiene, it is expected that the price of raw materials will even more dramatically rise in the future. As such, there is a need to make use of inexpensive olefin resource even in tire materials.
To address this issue, some techniques have been proposed to improve weather resistance by blending an ethylene-propylene-diene rubber (EPDM) containing olefin as a principal component. These techniques, however, suffer from drawbacks, such as poor compatibility with conjugated dienes, lower crack growth resistance, and so on (see, for example, JP 2000-063639 A (PTL 7)).

In addition, applying a copolymer of a conjugated diene and a non-conjugated olefin to the compounded rubber results in fewer double bonds in the conjugated diene unit (the unit derived from the conjugated diene compound) in the copolymer as compared with conjugated polymers, and therefore, improved ozone resistance. In addition, one of the characteristics other than ozone resistance required when a rubber composition is applied to various applications (such as tires, conveyor belts or anti-vibration rubber) includes good crack growth resistance.
It is well known that coordination anionic polymerization using catalyst systems represented by a Ziegler-Natta catalyst allows for homopolymerization of olefins and dienes. However, it was difficult to provide efficient copolymerization of olefins and dienes using such polymerization systems.
To deal with these issues, PTL 1-6 disclose the aforementioned techniques, but fail to teach or suggest that a rubber which is excellent in ozone resistance (weather resistance) and crack growth resistance may be obtained by mixing a conjugated diene-based polymer with a conjugated diene compound/non-conjugated olefin copolymer in which the content of 1,2 adduct units (including 3,4 adduct units) of the conjugated diene compound in a unit derived from the conjugated diene compound is 5 % or less. PTL 8 relates to an ethylene-based copolymer rubber and a composition thereof.

### CITATION LIST

### Patent Literature

PTL 1: JP 2000-154210 A
PTL 2: JP 2006-249442 A
PTL 3: JP 2006-503141 A
PTL 4: JP 11-228743 A
PTL 5: JP 2000-086857 A
PTL 6: JP 2000-154279 A
PTL 7: JP 2000-063639 A
PTL 8: JP 2000-256423 A

### SUMMARY OF INVENTION

### (Technical Problem)

In view of the above, an object of the present invention is to provide: a rubber composition comprising a copolymer of a conjugated diene compound and a non-conjugated olefin, which is used for manufacturing a rubber with low heat generation properties and excellent in heat resistance, ozone resistance (weather resistance) as well as crack growth resistance; a rubber composition for tire side use using the rubber composition for tire sidewall members; a crosslinked rubber composition obtained by crosslinking the rubber composition; and a tire manufactured by using the rubber composition or the crosslinked rubber composition.

### (Solution to Problem)

The inventors of the present invention have made intensive studies to achieve the above-described object and found that a copolymer in which the content of 1,2 adduct units (including 3,4 adduct units) in a unit derived from the conjugated diene compound is 5 % or less may be obtained by polymerizing a conjugated diene compound and a non-conjugated olefin in the presence of a specific catalyst. The present invention has been completed based on this finding.

That is, a rubber composition comprising a copolymer according to the present invention is a rubber composition comprising a copolymer of a conjugated diene compound and a non-conjugated olefin, in which the content of 1,2 adduct units (including 3,4 units) in a unit derived from the conjugated diene compound is 5 % or less, and the non-conjugated olefin is at least one selected from the group consisting of ethylene, propylene, and 1-butene; and a conjugated diene-based polymer, wherein the conjugated diene-based polymer means a polymer that does not contain a non-conjugated olefin as a monomer unit component, the content of 1,2 adduct units (including 3,4 adduct units) is determined through ¹H-NMR spectroscopy, and a mass ratio of the copolymer of a conjugated diene compound and a non-conjugated olefin to the conjugated diene-based polymer is 10/90 to 90/10.

In the rubber composition of the present invention, a unit derived from the conjugated diene compound preferably has a cis-1,4 bond content of more than 50 mol%.

In the rubber composition of the present invention, the content of a unit derived from the non-conjugated olefin is greater than 0 mol% and not more than 50 mol%.

The rubber composition of the present invention preferably has a polystyrene-equivalent average-weight molecular weight of 10,000 to 10,000,000.

The rubber composition of the present invention preferably has a molecular weight distribution (Mw/Mn) of 10 or less.

In the rubber composition of the present invention, the conjugated diene compound is preferably at least one selected from the group consisting of 1,3-butadiene and isoprene.

The rubber composition of the present invention further includes carbon black, which preferably has a nitrogen adsorption specific surface area (N₂SA) of 20 m²/g to 100 m²/g.

The rubber composition of the present invention preferably contains the carbon black by 10 parts by mass to 70 parts by mass per 100 parts by mass of the rubber component.

In the rubber composition of the present invention, the conjugated diene-based polymer is preferably natural rubber.

In the rubber composition of the present invention, the content of the natural rubber per 100 parts by mass of the rubber component is preferably at least 10 parts by mass.

Preferably, the rubber composition of the present invention further includes a crosslinking agent by 0.1 parts by mass to 20 parts by mass per 100 parts by mass of the rubber component.

A rubber composition for tire side use according to the present invention uses the rubber composition of the present invention for tire sidewall members.

A crosslinked rubber composition according to the present invention is obtained by crosslinking the rubber composition of the present invention.

A tire according to the present invention is manufactured by using the rubber composition of the present invention or the crosslinked rubber composition of the present invention.
The tire of the present invention uses the rubber composition of the present invention or the crosslinking rubber composition of the present invention for sidewall members thereof.

### (Advantageous Effect of Invention)

According to the present invention, there may be provided: a rubber composition comprising a copolymer of a conjugated diene compound and a non-conjugated olefin, which is used for manufacturing a rubber with low heat generation properties and excellent in heat resistance, ozone resistance (weather resistance) as well as crack growth resistance; a rubber composition for tire side use using the rubber composition for tire sidewall members; a crosslinked rubber composition obtained by crosslinking the rubber composition; and a tire manufactured by using the rubber composition or the crosslinked rubber composition.

### BRIEF DESCRIPTION OF DRAWINGS

FIG. 1 is a ¹³C-NMR spectrum chart of Copolymer A.
FIG. 2 illustrates a DSC curve of Copolymer A.
FIG. 3 illustrates a DSC curve of Copolymer B.
FIG. 4 illustrates a DSC curve of Copolymer C.
FIG. 5 illustrates a DSC curve of Copolymer D.

### DESCRIPTION OF EMBODIMENTS

### (Copolymer)

The present invention will be described in detail below.

The copolymer used in the present invention includes a non-conjugated olefin as a monomer unit component in the copolymer.

The copolymer of the present invention is a copolymer of a conjugated diene compound and a non-conjugated olefin, in which the content of 1,2 adduct units (including 3,4 adduct units) of a unit derived from the conjugated diene compound is 5 % or less.

The content of 1,2 adduct units (including 3,4 adduct units) of the conjugated diene compound in a unit derived from the conjugated diene compound of the conjugated diene compound/non-conjugated olefin copolymer is not particularly limited as long as it is not more than 5 %, and may be selected appropriately depending on the intended use, preferably 3 % or less and more preferably 2 % or less.

If the content of 1,2 adduct units (including 3,4 adduct units) of the conjugated diene compound in the unit derived from the conjugated diene compound of the conjugated diene compound/non-conjugated olefin copolymer is not more than 5 %, it is possible to improve the elongation-induced crystallization ability of the conjugated diene compound/non-conjugated olefin copolymer and of the conjugated diene-based polymer, which will be described later, thereby enhancing crack growth resistance, and furthermore, suppressing generation of radicals to improve weather resistance as well as low heat generation properties and heat resistance. Further, if the content of 1,2 adduct units (including 3,4 adduct units) in the unit derived from the conjugated diene compound is not more than 3 %, heat resistance may be improved. More preferably, the content of 1,2 adduct units (including 3,4 adduct units) in the unit derived from the conjugated diene compound is not more than 2 %.

The above-described content of 1,2 adduct units (including 3,4 adduct units) corresponds to an amount contained in a unit derived from the conjugated diene compound, rather than the ratio to the entire copolymer.

Here, the content of 1,2 adduct units (including 3,4 adduct units) in the conjugated diene compound unit (the content of 1,2 adduct units (including 3,4 adduct units) of a conjugated diene compound in a unit derived from a conjugated diene compound) is equal to a 1,2-vinyl bond content when the conjugated diene compound is butadiene.

In addition, the chain structure of the conjugated diene compound/non-conjugated olefin copolymer is not particularly limited and may be selected appropriately depending on the intended use, examples of which include block-, random- and tapered-type.

For example, this copolymer is suitable for HIPS (High Impact Polystyrene), ABS (Acrylonitrile Butadiene Styrene resin) and other formulations obtained by peroxide crosslinking.

In the copolymer used in the present invention, the unit derived from the conjugated diene compound preferably has a cis-1,4 bond content of more than 50 mol%. The cis-1,4 bond content is more preferably 75 % or more, even more preferably 85 % or more, yet more preferably 90 % or more, particularly preferably 95 % or more, and most preferably 97 % or more. When the unit derived from the conjugated diene compound has a cis-1,4 bond content in the above-described range, the copolymer of the present invention has a low glass transition temperature (Tg) and good crack growth resistance.
The unit derived from the conjugated diene compound having a cis 1,4 bond content of less than 50 % may have lower durability (such as fracture resistant properties and crack growth resistance) or may not exhibit extended crystallinity.
On the other hand, the unit derived from the conjugated diene compound having a cis 1,4 bond content in a particularly preferred range is advantageous in durability (such as fracture resistant properties and crack growth resistance) and extended crystallinity.
It should be noted that the cis-1,4 bond content corresponds to an amount in the unit derived from the conjugated diene compound, rather than the ratio to the entire copolymer.

The copolymer used in the present invention is free of a problem of molecular weight reduction, and the weight-average molecular weight (Mw) thereof is not particularly limited. However, in view of the application to polymer materials, a polystyrene-equivalent weight-average molecular weight (Mw) of the copolymer is preferably 10,000 to 10,000,000, more preferably 10,000 to 1,000,000, and even more preferably 50,000 to 600,000. Further, this copolymer preferably has a molecular weight distribution (Mw/Mn) of 10 or less, more preferably 5 or less, which is represented by a ratio of weight-average molecular weight (Mw) to number-average molecular weight (Mn). This is because a molecular weight distribution exceeding 10 leads to nonuniform physical properties. It should be noted here that the average molecular weight and the molecular weight distribution may be determined by gel permeation chromatography (GPC) using polystyrene as the standard.

In the copolymer used in the present invention, the content of a unit derived from the non-conjugated olefin is preferably more than 0 mol% and less than 100 mol%. If the content of the unit derived from the non-conjugated olefin is in the above-specified range, the mechanical properties such as rupture strength may be improved in a more reliable manner. In addition, from the viewpoint of improving mechanical properties such as rupture strength, without causing phase separation of the copolymer, it is more preferable that the content of the unit derived from the above-described non-conjugated olefin is more than 0 mol% and not more than 50 mol%, particularly preferably more than 0 mol% and not more than 40 mol%.
If the content of the unit derived from non-conjugated olefin in the conjugated diene compound/non-conjugated olefin copolymer is more than 50 mol%, this may deteriorate compatibility with the conjugated diene-based polymer as described later, resulting in a reduction in weather resistance and crack growth resistance.
On the other hand, if the content of the unit derived from the non-conjugated olefin in the conjugated diene compound/non-conjugated olefin copolymer is in the above-described more preferred range, this is advantageous in terms of workability.

On the other hand, in the copolymer used in the present invention, the content of the unit derived from the conjugated diene compound is preferably more than 0 mol% and less than 100 mol%, more preferably 50 mol% or more and less than 100 mol%, and particularly preferably 60 mol% or more and less than 100 mol%. The content of the unit derived from the conjugated diene compound in the ranges specified above allows the copolymer of the present invention to uniformly behave as an elastomer. If the content of the unit derived from the conjugated diene compound in the conjugated diene compound/non-conjugated olefin copolymer is less than 50 mol%, the resulting copolymer may behave more like a plastic and present poor properties as an elastomer, leading to insufficient crack resistance, less compatibility with the conjugated diene-based polymer as described later, and lower crack growth resistance.
On the other hand, if the content of the unit derived from the conjugated diene compound in the conjugated diene compound/non-conjugated olefin copolymer is in the above-described more preferred range, the resulting copolymer is advantageous in terms of workability and fatigue resistance.

A conjugated diene compound to be used as a monomer preferably has 4 to 12 carbon atoms, and more preferably 4 to 8 carbon atoms. Specific examples of the conjugated diene compound include 1,3-butadiene, isoprene, 1,3-pentadiene, and 2,3-dimethylbutadiene; among these, preferred are 1,3-butadiene and isoprene. In addition, these conjugated diene compounds may be used alone or in a combination of two or more.
Any of the aforementioned specific examples of conjugated diene compounds can be used for preparing the copolymer of the present invention in the same mechanism.

On the other hand, a non-conjugated olefin to be used as a monomer, which is a non-conjugated olefin other than the conjugated diene compound, has an excellent heat resistance, and is capable of reducing the ratio of double covalent bonds in the main chain of the copolymer so as to reduce crystallinity thereof, to thereby increase design freedom as an elastomer. The non-conjugated olefin is at least one selected from the group consisting of ethylene, propylene and 1-butene, and particularly preferred is ethylene. An α-olefin has a double bond at the α position of an olefin, and therefor allows efficient copolymerization with a conjugated diene. These non-conjugated olefins may be used alone or in combination of two or more. As used herein, olefin refers to unsaturated aliphatic hydrocarbon, which is a compound containing at least one carbon-carbon double covalent bond.

In addition, since the copolymer of the present invention exhibits static crystallinity when containing a block sequence composed of monomeric units of the non-conjugated olefin, it may indicate the excellent mechanical properties, such as breaking strength. The block sequence includes a multiblock sequence. A block copolymer including a plurality of structures of (X-Y) or of (Y-X) is referred to as multiblock sequence (where X denotes a block sequence including monomer units of a non-conjugated olefin, and Y denotes a block sequence including monomer units of a conjugated diene compound).

Next, a method of manufacturing the copolymer according to the present invention will be described in detail. However, the manufacturing method described in detail below is merely an example.
A first method of manufacturing the copolymer of the present invention includes polymerizing a conjugated diene compound and a non-conjugated olefin in the presence of the following polymerization catalyst or polymerization catalyst composition. It should be noted that any polymerization method may be used, including solution polymerization, suspension polymerization, liquid phase bulk polymerization, emulsion polymerization, gas phase polymerization, solid phase polymerization, and so on. Further, in the case of using a solvent for polymerization, any solvent that is inactive in polymerization can be used, and examples thereof include toluene, hexane, cyclohexane, and a mixture thereof.

The above-described manufacturing method allows copolymerization of monomers, i.e., a conjugated diene compound and a non-conjugated olefin, as is the case with a normal method of manufacturing polymers by means of coordinated ionic polymerization catalysts, except that the above polymerization catalyst or polymerization catalyst composition is used.

### <First Polymerization Catalyst Composition>

An example of the aforementioned polymerization catalyst composition includes a polymerization catalyst composition (hereinafter, also referred to as a "first polymerization catalyst composition") including at least one complex selected from the group consisting of: a metallocene complex represented by the following general formula (I); a metallocene complex represented by the following general formula (II); and a half metallocene cation complex represented by the following general formula (III):

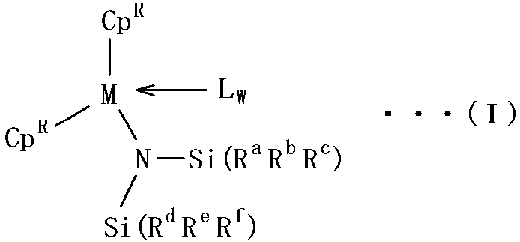

(In the formula (I), M represents a lanthanoid element, scandium, or yttrium; Cp^{R} each independently represents an unsubstituted or substituted indenyl group; R^{a} to R^{f} each independently represent a hydrogen atom or an alkyl group having 1 to 3 carbon atoms; L represents a neutral Lewis base; and w represents an integer of 0 to 3.);

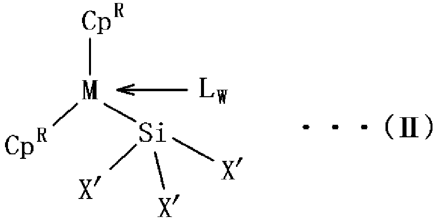

(In the formula (II), M represents a lanthanoid element, scandium, or yttrium; Cp^{R} each independently represents an unsubstituted or substituted indenyl group; X' represents a hydrogen atom, a halogen atom, an alkoxide group, a thiolate group, an amide group, a silyl group, or a hydrocarbon group having 1 to 20 carbon atoms; L represents a neutral Lewis base; and w represents an integer of 0 to 3.); and

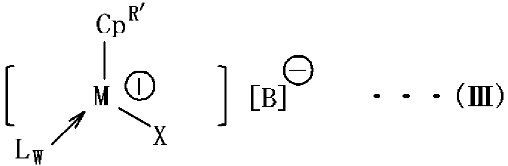

(In the formula (III), M represents a lanthanoid element, scandium, or yttrium; Cp^{R'} each independently represents an unsubstituted or substituted cyclopentadienyl, indenyl, fluorenyl group; X represents a hydrogen atom, a halogen atom, an alkoxide group, a thiolate group, an amide group, a silyl group, or a hydrocarbon group having 1 to 20 carbon atoms; L represents a neutral Lewis base; w represents an integer of 0 to 3; and [B]⁻ represents a non-coordinating anion.). The first polymerization catalyst composition may further include another component such as a co-catalyst, which is contained in a general polymerization catalyst composition containing a metallocene complex. As used herein, the metallocene complex is a complex compound having one or more cyclopentadienyl groups or derivative of cyclopentadienyl groups bonded to the central metal. In particular, a metallocene complex may be referred to as a "half metallocene complex" when the number of cyclopentadienyl group or derivative thereof bonded to the central metal is one. In the polymerization system, the concentration of the complex contained in the first polymerization catalyst composition is preferably defined to fall within a range of 0.1 mol/L to 0.0001 mol/L.

In the metallocene complex represented by the general formulae (I) and (II) above, Cp^{R} in the formulae represents an unsubstituted or substituted indenyl group. Cp^{R} having an indenyl ring as a basic skeleton may be represented by C₉H_{7-X}R_{X} or C₉H_{11-X}R_{X}. Here, X represents an integer of 0 to 7 or 0 to 11. Further, R each independently preferably represents a hydrocarbyl group or a metalloid group. The hydrocarbyl group preferably has 1 to 20 carbon atoms, more preferably 1 to 10 carbon atoms, and even more preferably 1 to 8 carbon atoms. Preferred specific examples of the hydrocarbyl group include a methyl group, an ethyl group, a phenyl group, and a benzyl group. Examples of metalloid in the metalloid group include germyl (Ge), stannyl (Sn), and silyl (Si). In addition, the metalloid group preferably has a hydrocarbyl group which is similar to the hydrocarbyl group described above. A specific example of the metalloid group includes a trimethylsilyl group. Specific examples of the substituted indenyl group include 2-phenyl indenyl and 2-methyl indenyl group. Two Cp^{R} in the general formulae (I) and (II) may be the same as or different from each other.

In the half metallocene cation complex represented by the general formula (III), Cp^{R'} in the formula represents a substituted or unsubstituted cyclopentadienyl, indenyl, or fluorenyl group, with the substituted or unsubstituted indenyl group being preferred. Cp^{R'} having a cyclopentadienyl ring as a basic skeleton is represented by C₅H_{5-X}R_{X}. Here, X represents an integer of 0 to 5. Further, R each independently preferably represents a hydrocarbyl group or a metalloid group. The hydrocarbyl group preferably has 1 to 20 carbon atoms, more preferably 1 to 10 carbon atoms, and still more preferably 1 to 8 carbon atoms. Preferred specific examples of the hydrocarbyl group include a methyl group, an ethyl group, a phenyl group, and a benzyl group. Examples of metalloid in the metalloid group include germyl (Ge), stannyl (Sn), and silyl (Si). In addition, the metalloid group preferably has a hydrocarbyl group which is similar to the hydrocarbyl group described above. A specific example of the metalloid group includes a trimethylsilyl group. Cp^{R'} having a cyclopentadienyl ring as a basic skeleton is specifically exemplified as follows. 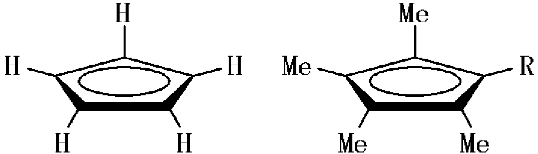 (In the formula, R represents a hydrogen atom, a methyl group, or an ethyl group.)

In the general formula (III), Cp^{R'} having an indenyl ring as a basic skeleton is defined as the same as Cp^{R} in the general formula (I), and preferred examples thereof are also the same as those of Cp^{R} in the general formula (I).

In the general formula (III), Cp^{R'} having the fluorenyl ring above as a basic skeleton may be represented by C₁₃H_{9-X}R_{X} or C₁₃H_{17-X}R_{X}. Here, X represents an integer of 0 to 9 or 0 to 17. Further, R each independently preferably represents a hydrocarbyl group or a metalloid group. The hydrocarbyl group preferably has 1 to 20 carbon atoms, more preferably 1 to 10 carbon atoms, and still more preferably 1 to 8 carbon atoms. Preferred specific examples of the hydrocarbyl group include a methyl group, an ethyl group, a phenyl group, and a benzyl group. Examples of metalloid in the metalloid group include germyl (Ge), stannyl (Sn), and silyl (Si). In addition, the metalloid group preferably has a hydrocarbyl group which is similar to the hydrocarbyl group described above. A specific example of the metalloid group includes a trimethylsilyl group.

The central metal represented by M in the general formulae (I), (II), and (III) represents a lanthanoid element, scandium, or yttrium. The lanthanoid elements include 15 elements with atomic numbers 57 to 71, and may be any one of them. Preferred examples of the central metal represented by M include samarium (Sm), neodymium (Nd), praseodymium (Pr), gadolinium (Gd), cerium (Ce), holmium (Ho), scandium (Sc), and yttrium (Y).

The metallocene complex represented by the general formula (I) includes a silyl amide ligand represented by [-N(SiR₃)₂]. Groups represented by R (R^{a} to R^{f} in the general formula (I)) in the silyl amide ligand each independently represent a hydrogen atom or an alkyl group having 1 to 3 carbon atoms, and it is preferred that at least one of R^{a} to R^{f} represents a hydrogen atom. With at least one of R^{a} to R^{f} representing a hydrogen atom, the catalyst can be synthesized with ease, and the bulkiness around silicon can be reduced, to thereby allow the non-conjugated olefin to be easily introduced. Based on the same objective, it is further preferred that at least one of R^{a} to R^{c} represents a hydrogen atom, and at least one of R^{d} to R^{f} represents a hydrogen atom. Additionally, a methyl group is preferred as the alkyl group.

The metallocene complex represented by the general formula (II) includes a silyl ligand represented by [-SiX'₃]. X' in the silyl ligand represented by [-SiX'₃] is a group defined as the same as X in the general formula (III) described below, and preferred examples thereof are also the same as those of X in the general formula (III).

In the general formula (III), X represents a group selected from the group consisting of a hydrogen atom, a halogen atom, an alkoxide group, a thiolate group, an amide group, a silyl group, and a hydrocarbon group having 1 to 20 carbon atoms. In the general formula (III), the alkoxide group represented by X may be any one of aliphatic alkoxy groups such as a methoxy group, an ethoxy group, a propoxy group, an n-butoxy group, an isobutoxy group, a sec-butoxy group, and a tert-butoxy group; and aryl oxide groups (aromatic alkoxy groups) such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, and a 2-isopropyl-6-neopentylphenoxy group. Among these, preferred is the 2,6-di-tert-butylphenoxy group.

In the general formula (III), the thiolate group represented by X may be any one of: aliphatic thiolate groups such as a thiomethoxy group, a thioethoxy group, a thiopropoxy group, a thio-n-butoxy group, a thioisobutoxy group, a thio-sec-butoxy group, and a thio-tert-butoxy group; and aryl thiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, and a 2,4,6-triisopropylthiophenoxy group. Among these, preferred is the 2,4,6-triisopropylthiophenoxy group.

In the general formula (III), the amide group represented by X may be any one of: aliphatic amide groups such as a dimethyl amide group, a diethyl amide group, and a diisopropyl amide group; arylamide groups such as a phenyl amide group, a 2,6-di-tert-butylphenyl amide group, a 2,6-diisopropylphenyl amide group, a 2,6-dineopentylphenyl amide group, a 2-tert-butyl-6-isopropylphenyl amide group, a 2-tert-butyl-6-neopentylphenyl amide group, a 2-isopropyl-6-neopentylphenyl amide group, and a 2,4,6-tri-tert-butylphenyl amide group; and bistrialkylsilyl amide groups such as a bistrimethylsilyl amide group. Among these, preferred is the bistrimethylsilyl amide group.

In the general formula (III), the silyl group represented by X may be any one of a trimethylsilyl group, a tris(trimethylsilyl)silyl group, a bis(trimethylsilyl)methylsilyl group, a trimethylsilyl(dimethyl)silyl group, and a triisopropylsilyl(bistrimethylsilyl)silyl group. Among these, preferred is the tris(trimethylsilyl)silyl group.

In the general formula (III), the halogen atom represented by X may be any one of a fluorine atom, a chlorine atom, a bromine atom, and an iodine atom; among these, preferred are the chlorine atom and the iodine atom. Specific examples of the hydrocarbon group having 1 to 20 carbon atoms represented by X include: linear or branched aliphatic hydrocarbon groups such as a methyl group, an ethyl group, an n-propyl group, an isopropyl group, an n-butyl group, an isobutyl group, a sec-butyl group, a tert-butyl group, a neopentyl group, a hexyl group, and an octyl group; aromatic hydrocarbon groups such as a phenyl group, a tolyl group, and a naphthyl group; aralkyl groups such as a benzyl group; and hydrocarbon groups such as a trimethylsilylmethyl group and a bistrimethylsilylmethyl group each containing a silicon atom. Among these, preferred are the methyl group, the ethyl group, the isobutyl group, the trimethylsilylmethyl group, and the like.

In the general formula (III), the bistrimethylsilyl amide group or the hydrocarbon group having 1 to 20 carbon atoms is preferred as X.

In the general formula (III), examples of the non-coordinating anion represented by [B]⁻ include tetravalent boron anions. Specific examples of the tetravalent boron anion include tetraphenyl borate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (tripheyl, pentafluorophenyl)borate, [tris(pentafluorophenyl), phenyl]borate, and tridecahydride-7,8-dicarbaundecaborate. Among these, preferred is the tetrakis(pentafluorophenyl)borate.

The metallocene complexes represented by the general formulae (I) and (II) and the half metallocene cation complex represented by the general formula (III) may include 0 to 3, preferably 0 or 1 neutral Lewis bases represented by L. Examples of the neutral Lewis base L include tetrahydrofuran, diethyl ether, dimethylaniline, trimethylphosphine, lithium chloride, neutral olefins, and neutral diolefins. When a plurality of neutral Lewis bases represented by L are incorporated, respective L may be the same as or different from each other.

The metallocene complexes represented by the general formulae (I) to (II), and the half metallocene cation complex represented by the general formula (III) may be each present as a monomer, a dimer or a higher-order multimer.

The metallocene complex represented by the general formula (I) can be obtained by, for example, subjecting a lanthanoid trishalide, a scandium trishalide, or a yttrium trishalide to reaction in a solvent with a salt of indenyl (for example, a potassium salt or a lithium salt) and a salt of bis(trialkylsilyl)amide (for example, a potassium salt or a lithium salt). The reaction temperature only needs to be set to about room temperature, and thus the complex can be manufactured in mild conditions. In addition, reaction time is arbitrary, but about several hours to several tens of hours. Although not particularly limited, a reaction solvent is preferably such a solvent that dissolves the raw material and products. For example, toluene may be used. In the following, a reaction example for obtaining the metallocene complex represented by the general formula (I) is described.

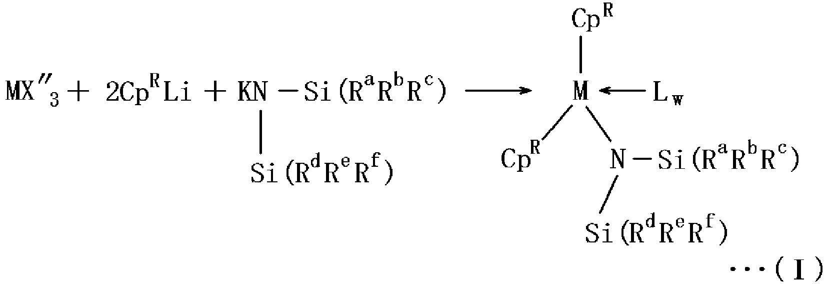

### (In the Formula, X'' represents a halide.)

The metallocene complex represented by the general formula (II) can be obtained by, for example, subjecting a lanthanoid trishalide, a scandium trishalide, or a yttrium trishalide to reaction in a solvent with a salt of indenyl (for example, a potassium salt or a lithium salt) and a salt of silyl (for example, a potassium salt or a lithium salt). The reaction temperature only needs to be set to about room temperature, and thus the complex can be manufactured in mild conditions. In addition, reaction time is arbitrary, but about several hours to several tens of hours. A reaction solvent is not particularly limited, with a solvent that dissolves the raw material and products being preferred, and for example, toluene may be used. In the following, a reaction example for obtaining the metallocene complex represented by the general formula (II) is described.

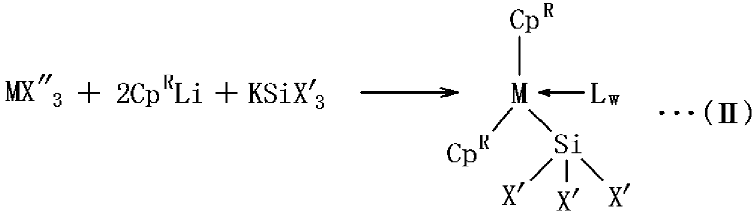

### (In the Formula, X'' represents a halide.)

The half metallocene cation complex represented by the general formula (III) can be obtained by, for example, the following reaction:

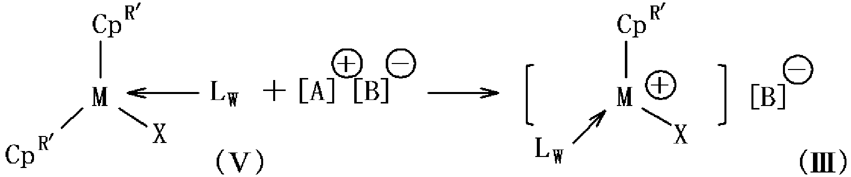

In the general formula (IV) representing a compound: M represents a lanthanoid element, scandium, or yttrium; Cp^{R'} independently represents an unsubstituted or substituted cyclopentadienyl, indenyl, or fluorenyl; X represents a hydrogen atom, a halogen atom, an alkoxide group, a thiolate group, an amide group, a silyl group, or a hydrocarbon group having 1 to 20 carbon atoms; L represents a neutral Lewis base; and w represents an integer of 0 to 3. Further, in the general formula [A]⁺[B]⁻ representing an ionic compound, [A]⁺ represents a cation; and [B]⁻ represents a non-coordinating anion.

Examples of the cation represented by [A]⁺ include a carbonium cation, an oxonium cation, an amine cation, a phosphonium cation, a cycloheptatrienyl cation, and a ferrocenium cation containing a transition metal. Examples of the carbonium cation include trisubstituted carbonium cations such as a triphenylcarbonium cation and a tri(substituted phenyl)carbonium cation. Specific examples of the tri(substituted phenyl)carbonium cation include a tri(methylphenyl)carbonium cation. Examples of the amine cation include: trialkylammonium cations such as a trimethylammonium cation, a triethylammonium cation, a tripropylammonium cation, and a tributylammonium cation; N,N-dialkylanilinium cations such as a N,N-dimethylanilinium cation, a N,N-diethylanilinium cation, and a N,N-2,4,6-pentamethylanilinium cation; and dialkylammonium cations such as a diisopropylammonium cation and a dicyclohexylammonium cation. Examples of the phosphonium cation include triarylphosphonium cations such as a triphenylphosphonium cation, a tri(methylphenyl)phosphonium cation, and a tri(dimethylphenyl)phosphonium cation. Of these cations, the N,N-dialkylanilinium cations or the carbonium cations are preferred, and the N,N-dialkylanilinium cations are particularly preferred.

In the general formula [A]⁺[B]⁻ representing the ionic compound to be used in the above reaction is a compound obtained by combining any one selected from the non-coordinating anions described above and any one selected from the cations described above. Preferred examples thereof include N,N-dimethylanilinium tetrakis(pentafluorophenyl)borate and triphenylcarbonium tetrakis(pentafluorophenyl)borate. The ionic compound represented by the general formula [A]⁺[B]⁻ is added in an amount of preferably 0.1-fold mol to 10-fold mol and more preferably about 1-fold mol, with respect to the metallocene complex. When the half metallocene cation complex represented by the general formula (III) is used in polymerization reaction, the half metallocene cation complex represented by the general formula (III) may be directly supplied to the polymerization system, or alternatively, the compound represented by the general formula (IV) used in the above reaction and the ionic compound represented by the general formula [A]⁺[B]⁻ may be separately supplied to the polymerization system, to thereby form the half metallocene cation complex represented by the general formula (III) in the reaction system. In addition, the half metallocene cation complex represented by the general formula (III) may be formed in the reaction system by using the metallocene complex represented by the general formula (I) or (II) and the ionic compound represented by the general formula [A]⁺[B]⁻ in combination.

Structures of the metallocene complex represented by the general formula (I) or (II) and of the half metallocene cation complex represented by the general formula (III) is preferably determined by X-ray crystallography.

The co-catalyst that can be contained in the first polymerization catalyst composition may be arbitrarily selected from components used as the co-catalyst for the general polymerization catalyst composition containing a general metallocene complex. Preferred examples of the co-catalyst include aluminoxanes, organic aluminum compounds, and the above ionic compounds. These co-catalysts may be contained alone or in combination of two or more.

The aluminoxane is preferably an alkyl aluminoxane, examples of which include methyl aluminoxane (MAO) and modified methyl aluminoxane. In addition, preferred examples of the modified methyl aluminoxane include MMAO-3A (manufactured by Tosoh Finechem Corporation). The content of the aluminoxane in the first polymerization catalyst composition is preferably about 10 to 1,000, more preferably about 100, at an element ratio (Al/M) of the aluminum element Al of the aluminoxane to the central metal element M in the metallocene complex.

On the other hand, a preferred example of the organic aluminum compounds may include an organic aluminum compound represented by a general formula AlRR'R" (where R and R' each independently represent a hydrocarbon group of C₁ to C₁₀ or a hydrogen atom, and R" is a hydrocarbon group of C₁ to C₁₀). In addition, specific examples of the organic aluminum compound include a trialkyl aluminum, a dialkyl aluminum chloride, an alkyl aluminum dichloride, and a dialkyl aluminum hydride; among these, preferred is the trialkyl aluminum. Further, examples of the trialkyl aluminum include triethyl aluminum and triisobutyl aluminum. The content of the organic aluminum compound in the first polymerization catalyst composition is preferably 1-fold mol to 50-fold mol and more preferably about 10-fold mol, with respect to the metallocene complex.

In the first polymerization catalyst composition, the metallocene complex represented by the general formulae (I) and (II) and the half metallocene cation complex represented by the general formula (III) may be combined with an appropriate co-catalyst, to thereby increase the cis-1,4 bond content and the molecular weight of a copolymer to be obtained.

### <Second Polymerization Catalyst Composition>

Another preferred example of the aforementioned polymerization catalyst composition may include:
a polymerization catalyst composition (hereinafter, also referred to as a "second polymerization catalyst composition") containing:
component (A): a rare earth element compound or a reactant of a rare earth element compound and a Lewis base, with no bond formed between the rare earth element and carbon;
component (B): at least one selected from the group consisting of: an ionic compound (B-1) composed of a non-coordinating anion and a cation; an aluminoxane (B-2); and at least one kind of halogen compound (B-3) from among a Lewis acid, a complex compound of a metal halide and a Lewis base, and an organic compound containing active halogen. Further, if the polymerization catalyst composition contains at least one kind of the ionic compound (B-1) and the halogen compound (B-3), the polymerization catalyst composition further contains:
component (C): an organic metal compound represented by the following general formula (i):

   YR¹ₐR²_{b}R³_{c} ··· (i)
(where Y is a metal selected from Group 1, Group 2, Group 12, and Group 13 of the periodic table; R¹ and R² are the same or different hydrocarbon groups each having 1 to 10 carbon atoms or a hydrogen atom; and R³ is a hydrocarbon group having 1 to 10 carbon atoms, in which R³ may be the same as or different from R¹ or R² above, with *a* being 1 and *b* and *c* both being 0 when Y is a metal selected from Group 1 of the periodic table, *a* and *b* being 1 and *c* being 0 when Y is a metal selected from Group 2 and Group 12 of the periodic table, *a, b,* and *c* are all 1 when Y is a metal selected from Group 13 of the periodic table).
The above-described second polymerization catalyst composition used in the method of manufacturing the copolymer is required to contain the above-described components (A) and (B), and if the polymerization catalyst composition contains at least one of the above-described ionic compound (B-1) and halogen compound (B-3), then it is further required to contain the above-described component (C).
The ionic compound (B-1) and the halogen compound (B-3) do not have carbon atoms to be fed to the component (A), and thus the component (C) becomes necessary as a source of feeding carbon to the component (A). Here, the polymerization catalyst composition still may include the component (C) even if the polymerization catalyst composition includes the aluminoxane (B-2). Further, the second polymerization catalyst composition may further include another component such as a co-catalyst, which is contained in a general rare earth element compound-based polymerization catalyst composition. In the polymerization system, the concentration of the component (A) contained in the second polymerization catalyst composition is preferably defined to fall within a range of 0.1 mol/L to 0.0001 mol/L.

The component (A) contained in the second polymerization catalyst composition is a rare earth element compound or a reactant of the rare earth element compound and a Lewis base. Here, a rare earth element compound or a reactant of the rare earth element compound and a Lewis base do not have a direct bond of the rare earth element and carbon. When the rare earth element compound or a reactant thereof does not have a direct bond of a rare earth element and carbon, the resulting compound is stable and easy to handle. As used herein, the rare earth element compound refers to a compound containing a lanthanoid element, scandium, or yttrium. The lanthanoid elements include elements with atomic numbers 57 to 71 of the periodic table. Specific examples of the lanthanoid element include lanthanum, cerium, praseodymium, neodymium, promethium, samarium, europium, gadolinium, terbium, dysprosium, holmium, erbio, tulio, itterbio, and lutezio. These components (A) may be contained alone or in combination of two or more.

The rare earth element compound is preferably composed of a rare earth metal of a bivalent or trivalent salt or of a complex compound, and further preferably a rare earth element compound containing at least one ligand selected from a hydrogen atom, a halogen atom, and an organic compound residue. Further, the rare earth element compound or the reactant of the rare earth element compound and the Lewis base is represented by the following general formula (XI) or (XII):

M¹¹X¹¹₂·L¹¹w ····· (XI)

M¹¹X¹¹₃·L¹¹w ····· (XII)

(where: M¹¹ represents a lanthanoid element, scandium, or yttrium; X¹¹ each independently represent a hydrogen atom, a halogen atom, an alkoxy group, a thiolate group, an amide group, a silyl group, an aldehyde residue, a ketone residue, a carboxylic acid residue, a thicarboxylic acid residue, or a phosphorous compound residue; L¹¹ represents a Lewis base; and w represents 0 to 3).

Specific examples of a group (ligand) to form a bond to the rare earth element of the rare earth element compound include: a hydrogen atom; aliphatic alkoxy groups such as a methoxy group, an ethoxy group, a propoxy group, an n-butoxy group, an isobutoxy group, a sec-butoxy group, and a tert-butoxy group; aromatic alkoxy groups such as a phenoxy group, a 2,6-di-tert-butylphenoxy group, a 2,6-diisopropylphenoxy group, a 2,6-dineopentylphenoxy group, a 2-tert-butyl-6-isopropylphenoxy group, a 2-tert-butyl-6-neopentylphenoxy group, and a 2-isopropyl-6-neopentylphenoxy group; aliphatic thiolate groups such as thiomethoxy group, a thioethoxy group, a thiopropoxy group, a thio-n-butoxy group, a thioisobutoxy group, a thio-sec-butoxy group, and a thio-tert-butoxy group; aryl thiolate groups such as a thiophenoxy group, a 2,6-di-tert-butylthiophenoxy group, a 2,6-diisopropylthiophenoxy group, a 2,6-dineopentylthiophenoxy group, a 2-tert-butyl-6-isopropylthiophenoxy group, a 2-tert-butyl-6-thioneopentylphenoxy group, a 2-isopropyl-6-thioneopentylphenoxy group, and a 2,4,6-triisopropylthiophenoxy group; aliphatic amide groups such as a dimethyl amide group, a diethyl amide group, a diisopropyl amide group; arylamide groups such as a phenyl amide group, a 2,6-di-tert-butylphenyl amide group, a 2,6-diisopropylphenyl amide group, a 2,6-dineopentylphenyl amide group, a 2-tert-butyl-6-isopropylphenyl amide group, a 2-tert-butyl-6-neopentylphenyl amide group, a 2-isopropyl-6-neopentylphenyl amide group, and a 2,4,6-tert-butylphenyl amide group; bistrialkylsilyl amide groups such as a bistrimethylsilyl amide group; silyl groups such as a trimethylsilyl group, a tris(trimethylsilyl)silyl group, a bis(trimethylsilyl)methylsilyl group, a trimethylsilyl(dimethyl)silyl group, and a triisopropylsilyl(bistrimethylsilyl)silyl group; halogen atoms such as a fluorine atom, a chlorine atom, a bromine atom, and an iodine atom. Other examples may include: residues of aldehyde such as salicylaldehyde, 2-hydroxy-1-naphthaldehyde, and 2-hydroxy-3-naphthaldehyde; residues of hydroxyphenone such as 2'-hydroxyacetophenone, 2'-hydroxybutyrophenone, and 2'-hydroxypropiophenone; residues of diketone such as acetylacetone, benzoylacetone, propionylaceton, isobutyl acetone, valerylacetone, and ethyl acetyl acetone; residues of an carboxylic acid such as an isovaleric acid, a caprylic acid, an octanoic acid, a lauric acid, a myristic acid, a palmitic acid, a stearic acid, an isostearic acid, an oleic acid, a linoleic acid, a cyclopentanecarboxylic acid, a naphthenic acid, an ethylhexanoic acid, a pivalic acid, a versatic acid (trade name of a product manufactured by Shell Chemicals Japan Ltd., a synthetic acid composed of a mixture of C10 monocarboxylic acid isomers), a phenylacetic acid, a benzoic acid, 2-naphthoate acid, a maleic acid, and a succinic acid; residues of thiocarboxylic acid such as a hexanethioic acid, 2,2-dimethylbutanethioic acid, a decanethioic acid, and a thiobenzoic acid; residues of phosphoric acid ester such as a phosphoric acid dibutyl, a phosphoric acid dipentyl, a phosphoric acid dihexyl, a phosphoric acid diheptyl, a phosphoric acid dioctyl, phosphoric acid bis(2-ethylhexyl), a phosphoric acid bis(1-methylheptyl), a phosphoric acid dilauryl, a phosphoric acid dioleyl, a phosphoric acid diphenyl, a phosphoric acid bis(p-nonylphenyl), a phosphoric acid bis(polyethylene glycol-p-nonylphenyl), a phosphoric acid(butyl)(2-ethylhexyl), a phosphoric acid(1-methylheptyl)(2-ethylhexyl), and a phosphoric acid(2-ethylhexyl)(p-nonylphenyl); residues of phosphonic acid ester such as a 2-ethylhexyl phosphonic acid monobutyl, a 2-ethylhexyl phosphonic acid mono-2-ethylhexyl, a phenylphosphonic acid mono-2-ethylhexyl, a 2-ethylhexyl phosphonic acid mono-p-nonylphenyl, a phosphonic acid mono-2-ethylhexyl, a phosphonic acid mono-1-methylheptyl, and a phosphonic acid mono-p-nonylphenyl; residues of phosphinic acid such as a dibutylphosphinic acid, a bis(2-ethylhexyl)phosphinic acid, a bis(1-methylheptyl)phosphinic acid, a dilauryl phosphinic acid, a dioleyl phosphinic acid, a diphenyl phosphinic acid, a bis(p-nonylphenyl)phosphinic acid, a butyl(2-ethylhexyl) phosphinic acid, (2-ethylhexyl) (1-methylheptyl)phosphinic acid, an (2-ethylhexyl)(p-nonylphenyl) phosphinic acid, a butyl phosphinic acid, 2-ethylhexyl phosphinic acid, a 1-methylheptyl phosphinic acid, an oleyl phosphinic acid, a lauryl phosphinic acid, a phenyl phosphinic acid, and a p-nonylphenyl phosphinic acid. These ligands may be used alone or in combination of two or more. Of those, amide groups, which easily form active species through reaction with co-catalyst, are preferred.

As to the component (A) used in the second polymerization catalyst composition, examples of the Lewis base to react with the rare earth element compound may include: tetrahydrofuran; diethyl ether; dimethylaniline; trimethylphosphine; lithium chloride, neutral olefins, and neutral diolefins. Here, in the case where the rare earth element compound reacts with a plurality of Lewis bases (in the case where w is 2 or 3 in Formulae (XI) and (XII)), the Lewis base L¹¹ in each Formula may be the same as or different from each other.

The component (B) contained in the second polymerization catalyst composition is at least one compound selected from the group consisting of: an ionic compound (B-1); an aluminoxane (B-2); and a halogen compound (B-3). The total content of the component (B) contained in the second polymerization catalyst composition is preferably defined to fall within a range of 0.1-fold mol to 50-fold mol, with respect to the component (A).

The ionic compound represented by (B-1) is formed of non-coordinating anion and cation, and an example thereof includes: an ionic compound that reacts with the rare earth element compound as the component (A) or with the reactant resulting from Lewis base and the rare earth element compound, so as to form a cationic transition metal compound. Here, examples of the non-coordinating anion include: tetraphenyl borate, tetrakis(monofluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate, tetra(tolyl)borate, tetra(xylyl)borate, (tripheyl, pentafluorophenyl)borate, [tris(pentafluorophenyl), phenyl]borate, and tridecahydride-7,8-dicarbaundecaborate. Meanwhile, examples of the cation may include a carbonium cation, an oxonium cation, an ammonium cation, a phosphonium cation, a cycloheptatrienyl cation, and a ferrocenium cation containing a transition metal. Specific examples of the carbonium cation include trisubstituted carbonium cations such as a triphenylcarbonium cation and a tri(substituted phenyl)carbonium cation, and more specific examples of the tri(substituted phenyl)carbonium cation include a tri(methylphenyl)carbonium cation and a tri(dimethylphenyl)carbonium cation. Examples of the ammonium cation include: trialkylammonium cations such as a trimethylammonium cation, a triethylammonium cation, a tripropylammonium cation, and a tributylammonium cation (such as a tri(n-butyl)ammonium cation); N,N-dialkylanilinium cations such as a N,N-dimethylanilinium cation, N,N-diethylanilinium cation, and a N,N-2,4,6-pentamethylanilinium cation; and dialkylammonium cations such as a diisopropylammonium cation and a dicyclohexylammonium cation. Specific examples of the phosphonium cation include triarylphosphonium cations such as a triphenylphosphonium cation, a tri(methylphenyl)phosphonium cation, and a tri(dimethylphenyl)phosphonium cation. Therefore, the ionic compound may preferably be a compound obtained by combining any one selected from the non-coordinating anions described above and any one selected from the cations described above. Specific examples thereof preferably include a N,N-dimethylanilinium tetrakis(pentafluorophenyl)borate and a triphenylcarbonium tetrakis(pentafluorophenyl)borate. These ionic compounds may be contained alone or in combination of two or more. The content of the ionic compound in the second polymerization catalyst composition is preferably 0.1-fold mol to 10-fold mol, and more preferably about 1-fold mol, with respect to the component (A).

The aluminoxane represented by (B-2) is a compound obtained by contacting an organic aluminum compound with a condensation agent, and examples thereof include: a chain type aluminoxane or a cyclic aluminoxane, both having a repeating unit represented by the general formula (-Al(R')O-) (where R' is a hydrocarbon group having 1 to 10 carbon atoms and may be partly substituted with halogen atom and/or alkoxy group, and the polymerization degree of the repeating unit is preferably at least 5, more preferably at least 10). Here, specific examples of R' include a methyl group, an ethyl group, a propyl group, and isobutyl group, with the methyl group being preferred. Further, examples of the organic aluminum compound used as a raw material of the aluminoxane may include: trialkyl aluminums such as trimethyl aluminum, triethyl aluminum, triisobutyl aluminum and the like; and mixtures thereof, with the trimethyl aluminum being particularly preferred. For example, an aluminoxane obtained using, as a raw material, a mixture of trimethyl aluminum and tributyl aluminum can be suitably used. The content of aluminoxane in the second polymerization catalyst composition is preferably about 10 to 1,000 at an element ratio (Al/M) of the aluminum element Al of the aluminoxane to the rare earth element M forming the component (A).

The halogen compound represented by (B-3) includes at least one of: a Lewis acid; a complex compound of a metal halide and a Lewis base; and an organic compound containing active halogen, and is capable of reacting with, for example, the rare earth element compound as the component (A) or with the reactant resulting from Lewis base and the rare earth element compound, so as to form a cationic transition metal compound. The content of the halogen compound in the second polymerization catalyst composition is preferably 1-fold mol to 5-fold mol, with respect to the component (A).

Examples of the Lewis acid may include: a boron-containing halogen compound such as B(C₆F₅)₃ and an aluminum-containing halogen compound such as Al(C₆F₅)₃, and may also include a halogen compound containing an element of Group III, Group IV, Group V, Group VI, and Group VIII of the periodic table. Preferred examples thereof include an aluminum halide or an organometallic halide. Preferred examples of the halogen element include chlorine and bromine. Specific examples of the Lewis acid include: a methyl aluminum dibromide; a methyl aluminum dichloride; an ethyl aluminum dibromide; an ethyl aluminum dichloride; a butyl aluminum dibromide; a butyl aluminum dichloride; a dimethyl aluminum bromide; a dimethyl aluminum chloride; a diethyl aluminum bromide; a diethyl aluminum chloride; a dibutyl aluminum bromide; a dibutyl aluminum chloride; a methyl aluminum sesquibromide; a methyl aluminum sesquichloride; a ethyl aluminum sesquibromide; an ethyl aluminum sesquichloride; a dibutyltin dichloride; an aluminum tribromide; an antimony trichloride; an antimony pentachloride; a phosphorus trichloride; a phosphorus pentachloride; a tin tetrachloride; a titanium tetrachloride; and tungsten hexachloride. Among these, particularly preferred are the diethyl aluminum chloride, the ethyl aluminum sesquichloride, the ethyl aluminum dichloride, the diethyl aluminum bromide, the ethyl aluminum sesquibromide, and the ethyl aluminum dibromide.

Preferred examples of the metal halide forming a complex compound of the metal halide and a Lewis base include: a beryllium chloride, a beryllium bromide; a beryllium iodide; a magnesium chloride; a magnesium bromide; a magnesium iodide; a calcium chloride; a calcium bromide; a calcium iodide; a barium chloride; a barium bromide; a barium iodide; a zinc chloride; a zinc bromide; a zinc iodide; a cadmium chloride; a cadmium bromide; a cadmium iodide; a mercury chloride; a mercury bromide; a mercury iodide; a manganese chloride; a manganese bromide; a manganese iodide; a rhenium chloride; a rhenium bromide; a rhenium iodide; a copper chloride; a copper iodide; a silver chloride; a silver bromide; a silver iodide; a gold chloride; a gold iodide; and a gold bromide. Among these, particularly preferred are the magnesium chloride, the calcium chloride, the barium chloride, the manganese chloride, the zinc chloride, and the copper chloride being preferred, and the magnesium chloride, the manganese chloride, the zinc chloride, and the copper chloride.

Preferred examples of the Lewis base forming a complex compound of the metal halide and the Lewis base include: a phosphorus compound; a carbonyl compound; a nitrogen compound; an ether compound; and an alcohol. Specific examples thereof include: a tributyl phosphate; a tri-2-ethylhexyl phosphate; a triphenyl phosphate; a tricresyl phosphate; a triethylphosphine; a tributylphosphine; a triphenylphosphine; a diethylphosphinoethane; a diphenyl phosphino ethane; an acetylacetone; a benzoylacetone; a propionitrileacetone; a valerylacetone; an ethylacetylacetone; a methyl acetoacetate; an ethyl acetoacetate; a phenyl acetoacetate; a dimethyl malonate; a diethyl malonate; a diphenyl malonate; an acetic acid; an octanoic acid; a 2-ethylhexoic acid; an oleic acid; a stearic acid; a benzoic acid; a naphthenic acid; a versatic acid; a triethylamine; a N,N-dimethylacetamide; a tetrahydrofuran; a diphenyl ether; a 2-ethylhexyl alcohol; an oleyl alcohol; stearyl alcohol; a phenol; a benzyl alcohol; a 1-decanol; and a lauryl alcohol. Among these, preferred are the tri-2-ethylhexyl phosphate, the tricresyl phosphate; the acetylacetone, the 2-ethylhexoic acid, the versatic acid, the 2-ethylhexyl alcohol; the 1-decanol; and the lauryl alcohol.

The Lewis base is subjected to reaction with the metal halide in the proportion of 0.01 mol to 30 mol, preferably 0.5 mol to 10 mol, per 1 mol of the metal halide. The use of the reactant obtained from the reaction of the Lewis base can reduce residual metal in the polymer.

An example of the organic compound containing active halogen includes benzyl chloride.

The component (C) contained in the second polymerization catalyst composition is an organic metal compound represented by the general formula (i):

YR¹ₐR²_{b}R³_{c} ··· (i)

(where Y is a metal selected from Group 1, Group 2, Group 12, and Group 13 of the periodic table; R¹ and R² are the same or different hydrocarbon groups each having 1 to 10 carbon atoms or a hydrogen atom; and R³ is a hydrocarbon group having 1 to 10 carbon atoms, in which R³ may be the same as or different from R¹ or R² above, *a* being 1 and *b* and *c* both being 0 when Y is a metal selected from Group 1 of the periodic table, *a* and *b* being 1 and *c* being 0 when Y is a metal selected from Group 2 and Group 12 of the periodic table, *a, b,* and *c* are all 1 when Y is a metal selected from Group 13 of the periodic table), and is preferably an organic aluminum compound represented by the general formula (X):

AlR¹¹R¹²R¹³ ··· (X)

(where R¹¹ and R¹² are the same or different hydrocarbon groups each having 1 to 10 carbon atoms or a hydrogen atom; and R¹³ is a hydrocarbon group having 1 to 10 carbon atoms, in which R¹³ may be the same as or different from R¹¹ or R¹² above). Examples of the organic aluminum compound in the formula (X) include: a trimethyl aluminum, a triethyl aluminum, a tri-n-propyl aluminum, a triisopropyl aluminum, a tri-n-butyl aluminum, a triisobutyl aluminum, a tri-t-butyl aluminum, a tripentyl aluminum, a trihexyl aluminum, a tricyclohexyl aluminum, a trioctyl aluminum; a diethylaluminum hydride, a di-n-propyl aluminum hydride, a di-n-butyl aluminum hydride, a diisobutyl aluminum hydride, a dihexyl aluminum hydride; a diisohexyl aluminum hydride, a dioctyl aluminum hydride, a diisooctyl aluminum hydride; an ethyl aluminum dihydride, a n-propyl aluminum dihydride, and an isobutyl aluminum dihydride. Among these, preferred are the triethyl aluminum, the triisobutyl aluminum, the diethyl aluminum hydride, and the diisobutyl aluminum hydride. The organic metal compounds as the component (C) may be contained alone or in combination of two or more. The content of the organic aluminum compound in the second polymerization catalyst composition is preferably 1-fold mol to 50-fold mol, and more preferably about 10-fold mol, with respect to the component (A).

### <Polymerization Catalyst and Third Polymerization Catalyst Composition>

Examples of the polymerization catalyst include: a metallocene-based composite catalyst which is used for polymerization with the conjugated diene compound and the non-conjugated olefin and is represented by the following formula (A):

RₐMX_{b}QY_{b} ··· (A)

(where R each independently represents an unsubstituted or substituted indenyl group, the R being coordinated with M; M represents a lanthanoid element, scandium, or yttrium; X each independently represents a hydrocarbon group having 1 to 20 carbon atoms, the X being µ-coordinated with M and Q; Q represents a Group 13 element in the periodic table; Y each independently represents a hydrocarbon group having 1 to 20 carbon atoms or a hydrogen atom, the Y being coordinated with Q; and *a* and *b* each are 2).

Preferred examples of the above-described metallocene-based composite catalyst include a metallocene-based composite catalyst represented by the following formula (XV): 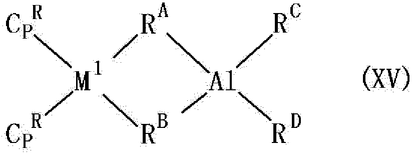 (where M¹ represents a lanthanoid element, scandium, or yttrium; Cp^{R} each independently represents an unsubstituted or substituted indenyl group; R^{A} to R^{B} each independently represent a hydrocarbon group having 1 to 20 carbon atoms, R^{A} and R^{B} being µ-coordinated with M¹ and Al; and R^{C} and R^{D} each independently represent a hydrocarbon group having 1 to 20 carbon atoms or a hydrogen atom).

In addition, the above-described third polymerization catalyst composition contains the above-described metallocene-based composite catalyst and a boron anion.

### <Metallocene-based Composite Catalyst>

The above-described metallocene-based composite catalyst will now be described in detail below. The above-described metallocene-based composite catalyst has a rare earth element of lanthanoid element, scandium or yttrium and a group 13 element in the periodic table, and is represented by the following formula (A):

RₐMX_{b}QY_{b} ··· (A)

(where R each independently represents an unsubstituted or substituted indenyl group, the R being coordinated with M; M represents a lanthanoid element, scandium, or yttrium; X each independently represents a hydrocarbon group having 1 to 20 carbon atoms, the X being µ-coordinated with M and Q; Q represents a Group 13 element in the periodic table; Y each independently represents a hydrocarbon group having 1 to 20 carbon atoms or a hydrogen atom, the Y being coordinated with Q; and *a* and *b* each are 2). The above-described metallocene-based polymerization catalyst allows for manufacture of a copolymer of a conjugated diene compound and a non-conjugated olefin. In addition, the use of the above-described metallocene-based composite catalyst, such as the one combined with an aluminum-based catalyst, can reduce or eliminate the amount of alkyl aluminum to be used in the step of synthesizing a copolymer. Meanwhile, the use of a conventional catalyst system requires a large amount of alkyl aluminum to be used in synthesizing a copolymer. For example, a conventional catalyst system requires alkyl aluminum of at least 10 equivalents relative to a metal catalyst, whereas the above-described metallocene-based composite catalyst of the present invention can exhibit an excellent catalytic effect through the addition of alkyl aluminum of only about 5 equivalents.

In the metallocene-based composite catalyst, the metal represented by M in the formula (A) is a lanthanoid element, scandium, or yttrium. The lanthanoid elements include 15 elements with atomic numbers 57 to 71, and may be any one of them. Preferred examples of the metal represented by M include samarium (Sm), neodymium (Nd), praseodymium (Pr), gadolinium (Gd), cerium (Ce), holmium (Ho), scandium (Sc), and yttrium (Y).

In the formula (A), R each independently represents an unsubstituted or substituted indenyl, the R being coordinated with the metal M. Specific examples of the substituted indenyl group include a 1,2,3-trimethyl indenyl group, a heptamethyl indenyl group, and a 1,2,4,5,6,7-hexamethyl indenyl group.

In the formula (A), Q represents a Group 13 element in the periodic table. Specific examples thereof include: boron, aluminum, gallium, indium, and thallium.

In the formula (A), X each independently represents a hydrocarbon group having 1 to 20 carbon atoms, the X being µ-coordinated with M and Q. Here, examples of the hydrocarbon group having 1 to 20 carbon atoms include: a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group. The µ-coordination refers to a state of coordination which forms a crosslinked structure.

In the formula (A), Y each independently represents a hydrocarbon group having 1 to 20 carbon atoms or a hydrogen atom, the Y being coordinated with Q. Here, examples of the hydrocarbon group having 1 to 20 carbon atoms include: a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

In the formula (XV) above, the metal represented by M¹ is a lanthanoid element, scandium, or yttrium. The lanthanoid elements include 15 elements with atomic numbers 57 to 71, and may be any one of them. Preferred examples of the metal represented by M¹ include samarium (Sm), neodymium (Nd), praseodymium (Pr), gadolinium (Gd), cerium (Ce), holmium (Ho), scandium (Sc), and yttrium (Y).

In the formula (XV), Cp^{R} represents an unsubstituted or substituted indenyl. Cp^{R} having an indenyl ring as a basic skeleton may be represented by C₉H_{7-X}R_{X} or C₉H_{11-X}R_{X}. Here, X represents an integer of 0 to 7 or 0 to 11. Further, R each independently preferably represents a hydrocarbyl group or a metalloid group. The hydrocarbyl group preferably has 1 to 20 carbon atoms, more preferably 1 to 10 carbon atoms, and still more preferably 1 to 8 carbon atoms. Preferred specific examples of the hydrocarbyl group include a methyl group, an ethyl group, a phenyl group, and a benzyl group. Examples of metalloid in the metalloid group include germyl (Ge), stannyl (Sn), and silyl (Si). In addition, the metalloid group preferably has a hydrocarbyl group which is similar to the hydrocarbyl group described above. A specific example of the metalloid group includes a trimethylsilyl group. Specific examples of the substituted indenyl group include 2-phenyl indenyl and 2-methyl indenyl group. Two Cp^{R} in the formula (XV) may be the same as or different from each other.

In the formula (XV), R^{A} and R^{B} each independently represent a hydrocarbon group having 1 to 20 carbon atoms, the R^{A} and R^{B} being µ-coordinated with M¹ and Al. Here, examples of the hydrocarbon group having 1 to 20 carbon atoms include: a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group. The µ-coordination refers to a state of coordination which forms a crosslinked structure.

In the formula (XV), R^{C} and R^{D} each independently represent a hydrocarbon group having 1 to 20 carbon atoms or a hydrogen atom. Here, examples of the hydrocarbon group having 1 to 20 carbon atoms include: a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

The metallocene-based composite catalyst can be obtained by, for example, reacting with an organic aluminum compound represented by AlR^{K}R^{L}R^{M} in a solvent, the metallocene complex represented by the following formula (XVI): 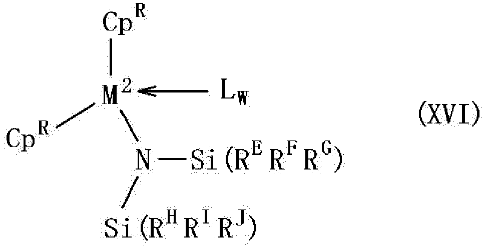 (where, M² represents a lanthanoid element, scandium, or yttrium; Cp^{R} each independently represents an unsubstituted or substituted indenyl group; R^{E} to R^{J} each independently represent an alkyl group having 1 to 3 carbon atoms or a hydrogen atom; L represents a neutral Lewis base; and w represents an integer of 0 to 3.). The reaction temperature only needs to be set to about room temperature, and thus the complex can be manufactured in mild conditions. In addition, reaction time is arbitrary, but about several hours to several tens of hours. The reaction solvent is not particularly limited, and any solvent including, for example, toluene and hexane, which are capable of dissolving the raw material and products can be preferably used. The structure of the metallocene-based composite catalyst may preferably be determined by ¹H-NMR or X-ray crystallography.

In the metallocene complex represented by the formula (XVI) above, Cp^{R} is an unsubstituted indenyl or substituted indenyl and has the same meaning as Cp^{R} in the formula (XV) above. In addition, in the formula (XVI) above, metal M² is a lanthanoid element, scandium or yttrium and has the same meaning as metal M¹ in the formula (XV) above.

The metallocene complex represented by the formula (XVI) above includes a silylamide ligand [-N(SiR₃)₂]. Each of R groups (R^{E} to R^{J} groups) included in the silylamide ligand is independently an alkyl group having 1 to 3 carbon atoms or a hydrogen atom. Also, at least one of R^{E} to R^{J} is preferably a hydrogen atom. If at least one of R^{E} to R^{J} is a hydrogen atom, it becomes easier to synthesize a catalyst. Additionally, a methyl group is preferred as the alkyl group.

The metallocene complex represented by the formula (XVI) above further contains 0 to 3, preferably 0 or 1 neutral Lewis bases represented by L. Examples of the neutral Lewis base L include tetrahydrofuran, diethyl ether, dimethylaniline, trimethylphosphine, lithium chloride, neutral olefins, and neutral diolefins. When a plurality of neutral Lewis bases represented by L are incorporated, respective L may be the same or different from each other.

In addition, the metallocene complex represented by the formula (XVI) may be present as a monomer, a dimer or a higher-order multimer.

On the other hand, the organic aluminum compound used for generating the above-described metallocene-based composite catalyst is represented by AlR^{K}R^{L}R^{M}, where R^{K} and R^{L} are independently a univalent hydrocarbon group having 1 to 20 carbon atoms or a hydrogen atom, and R^{M} is a univalent hydrocarbon group having 1 to 20 carbon atoms, in which R^{M} may be the same as or different from R^{K} or R^{L} above. Here, examples of the univalent hydrocarbon group having 1 to 20 carbon atoms include: a methyl group, an ethyl group, a propyl group, a butyl group, a pentyl group, a hexyl group, a heptyl group, an octyl group, a decyl group, a dodecyl group, a tridecyl group, a tetradecyl group, a pentadecyl group, a hexadecyl group, a heptadecyl group, and a stearyl group.

Specific examples of the organic aluminum compound include: a trimethyl aluminum, a triethyl aluminum, a tri-n-propyl aluminum, a triisopropyl aluminum, a tri-n-butyl aluminum, a triisobutyl aluminum, a tri-t-butyl aluminum, a tripentyl aluminum, a trihexyl aluminum, a tricyclohexyl aluminum, a trioctyl aluminum; a diethylaluminum hydride, a di-n-propyl aluminum hydride, a di-n-butyl aluminum hydride, a diisobutyl aluminum hydride, a dihexyl aluminum hydride; a diisohexyl aluminum hydride, a dioctyl aluminum hydride, a diisooctyl aluminum hydride; an ethyl aluminum dihydride, a n-propyl aluminum dihydride, and an isobutyl aluminum dihydride. Among these, preferred are the triethyl aluminum, the triisobutyl aluminum, the diethyl aluminum hydride, and the diisobutyl aluminum hydride. These organic aluminum compounds may be contained alone or in combination of two or more. The content of the organic aluminum compound to be used for generating the metallocene-based composite catalyst is preferably 1-fold mol to 50-fold mol, and more preferably about 10-fold mol, with respect to the metallocene complex.

### <Third Polymerization Catalyst Composition>

Preferred examples of the polymerization catalyst composition include the above-described metallocene-based composite catalyst and boron anion. Furthermore, this polymerization catalyst composition preferably includes another component such as a co-catalyst, which is contained in a general polymerization catalyst composition containing a metallocene-based catalyst. Here, the third polymerization catalyst composition is also referred to two-component catalyst, which has the metallocene-based composite catalyst and boron anion. As is the case with the metallocene-based composite catalyst, the third polymerization catalyst composition further contains boron anion, which allows arbitrary control of the content of each monomer component in the copolymer.

In the third polymerization catalyst composition, a specific example of the boron anion forming the two-component catalyst includes a tetravalent boron anion. Examples thereof may include: a tetraphenyl borate, a tetrakis(monofluorophenyl)borate, a tetrakis(difluorophenyl)borate, a tetrakis(trifluorophenyl)borate, a tetrakis(tetrafluorophenyl)borate, a tetrakis(pentafluorophenyl)borate, a tetrakis(tetrafluoromethylphenyl)borate, a tetra(tolyl)borate, a tetra(xylyl)borate, a (tripheyl, pentafluorophenyl)borate, a [tris(pentafluorophenyl), phenyl]borate, and a tridecahydride-7,8-dicarbaundecaborate; among these, preferred is the tetrakis(pentafluorophenyl)borate.

The boron anion may be used as an ionic compound combined with cation. Examples of the cation include a carbonium cation, an oxonium cation, an amine cation, a phosphonium cation, a cycloheptatrienyl cation, and a ferrocenium cation containing a transition metal. Examples of the carbonium cation include trisubstituted carbonium cations such as a triphenylcarbonium cation and a tri(substituted phenyl)carbonium cation, and specific examples of the tri(substituted phenyl)carbonium cation include a tri(methylphenyl)carbonium cation. Examples of the amine cation include: trialkylammonium cations such as a trimethylammonium cation, a triethylammonium cation, a tripropylammonium cation, and a tributylammonium cation; N,N-dialkylanilinium cations such as a N,N-dimethylanilinium cation, N,N-diethylanilinium cation, and a N,N-2,4,6-pentamethylanilinium cation; and dialkylammonium cations such as a diisopropylammonium cation and a dicyclohexylammonium cation. Examples of the phosphonium cation include triarylphosphonium cations such as a triphenylphosphonium cation, a tri(methylphenyl)phosphonium cation, and a tri(dimethylphenyl)phosphonium cation. Of these cations, the N,N-dialkylanilinium cations or the carbonium cations are preferred, and the N,N-dialkylanilinium cations are particularly preferred. Therefore, preferred examples of the ionic compound include a N,N-dimethylanilinium tetrakis(pentafluorophenyl)borate and a triphenylcarbonium tetrakis(pentafluorophenyl)borate. The content of the ionic compound including a boron anion and a cation may preferably be added by 0.1-fold mol to 10-fold mol, and more preferably by about 1-fold mol, with respect to the metallocene-based composite catalyst.

While it is required to use the above-described metallocene-based composite catalyst and the above-described boron anion in the above-described third polymerization catalyst composition, if a boron anion is present in the reaction system in which the metallocene catalyst represented by the formula (XVI) above is reacted with the organic aluminum compound, it is not possible to synthesize the metallocene-based composite catalyst of the formula (XV) above. Accordingly, preparation of the above-described third polymerization catalyst composition requires the metallocene-based composite catalyst to be synthesized in advance and isolated and purified before combined with a boron anion.

Preferred examples of the co-catalyst that can be contained in the third polymerization catalyst composition may include an organic aluminum compound represented by the AlR^{K}R^{L}R^{M}, and also include an aluminoxane. The aluminoxane is preferably an alkyl aluminoxane, examples of which include methyl aluminoxane (MAO) and modified methyl aluminoxane. In addition, preferred examples of the modified methyl aluminoxane include MMAO-3A (manufactured by Tosoh Finechem Corporation). These aluminoxanes may be contained alone or in combination of two or more.

In the first method of manufacturing the copolymer of the present invention, as described above, polymerization may be performed using a general coordinated ionic polymerization catalyst similarly to a conventional method of manufacturing a copolymer, except for the use of the above-described polymerization catalyst composition. Here, the method of manufacturing the copolymer of the present invention can be performed in, for example, either one of the following manners: (1) the components forming the polymerization catalyst composition may be separately provided in the polymerization system including, as monomers, a conjugated diene compound and a non-conjugated olefin other than the conjugated diene compound, to thereby produce the polymerization catalyst composition in the reaction system, or (2) the polymerization catalyst composition prepared in advance may be provided into the polymerization system. Further, the option (2) also includes providing the metallocene complex (active species) activated by the co-catalyst. The amount of the metallocene complex to be contained in the polymerization catalyst composition is preferably set to fall within a range of 0.0001-fold mol to 0.01-fold mol with respect to the total amount of the conjugate diene compound and the non-conjugated olefin other than the conjugate diene compound.

Further, in the first method of manufacturing the copolymer according to the present invention, a terminator such as methanol, ethanol or isopropanol may be used to stop the polymerization.

In the first method of manufacturing the copolymer according to the present invention, the polymerization reaction of the conjugated diene compound and the non-conjugated olefin may preferably be performed in an inert gas atmosphere, and preferably in a nitrogen gas or argon gas atmosphere. The polymerization temperature of the polymerization reaction is not particularly limited, and preferably in a range of, for example, -100 °C to 200 °C, and may also be set to temperatures around room temperature. An increase in polymerization temperature may reduce the cis-1,4-selectivity in the polymerization reaction. The polymerization reaction is preferably performed under pressure in a range of 0.1 MPa to 10 MPa so as to allow the conjugated diene compound and the non-conjugated olefin to be sufficiently introduced into the polymerization system. Further, the reaction time of the polymerization reaction is not particularly limited, and may preferably be in a range of, for example, 1 second to 10 days, which may be selected as appropriate depending on the conditions such as the type of monomers to be polymerized, type of catalyst and polymerization temperature.

In the aforementioned method of manufacturing the copolymer, when the conjugated diene compound is polymerized with the non-conjugated olefin other than the conjugated diene compound, the pressure of the non-conjugated olefin is preferably in the range of 0.1 MPa to 10 MPa. If the pressure of the non-conjugated olefin is 0.1 MPa or more, it is possible to efficiently introduce the non-conjugated olefin into the reaction mixture. In addition, if the pressure of the non-conjugated olefin is excessively high, the effect attained by efficient introduction of the non-conjugated olefin reaches a peak. Therefore, the pressure of the non-conjugated olefin is preferably 10 MPa or less.

Further, according to the first method of manufacturing the copolymer of the present invention, in polymerizing the conjugated diene compound and the non-conjugated olefin, the concentration of the conjugated diene compound (mol/L) and the concentration of the non-conjugated olefin (mol/L) at the start of copolymerization preferably satisfy the following relation:
concentration of non-conjugated olefin/concentration of conjugated diene compound ≥ 1.0;
further preferably satisfy the following relation:
   concentration of non-conjugated olefin/concentration of conjugated diene compound ≥ 1.3;
and still further preferably satisfy the following relation:
   concentration of non-conjugated olefin/concentration of conjugated diene compound ≥ 1.7.
The ratio of the concentration of the non-conjugated olefin to the concentration of the conjugated diene compound is defined to be at least 1, to thereby efficiently introduce the non-conjugated olefin into the reaction mixture.

In addition, even without using the above-described first polymerization catalyst composition, second polymerization catalyst composition, polymerization catalyst or third polymerization catalyst composition, i.e., even when a normal coordinated ionic polymerization catalyst is used, the copolymer of the present invention may be manufactured by adjusting the way monomers are fed into the polymerization system. Specifically, a second method of manufacturing the copolymer according to the present invention has a feature in that charging of a conjugated diene compound is controlled in the presence of a non-conjugated olefin so as to organize the chain structure of the copolymer, to thereby control the arrangement of monomer units in the copolymer. As used herein, the term "polymerization system" refers to the location where a conjugated diene compound and a non-conjugated olefin are copolymerized, and specific examples thereof include a reaction container.

Here, charging of a conjugated diene compound may be performed by using either continuous charging or separate charging, and furthermore, a combination of both. As used herein, the continuous charging refers to, for example, adding a conjugated diene compound at a certain addition rate for a certain period.

Specifically, the concentration ratio of monomers in the polymerization system may be controlled by separate or continuous charging of a conjugated diene compound into a polymerization system for copolymerizing a conjugated diene compound and a non-conjugated olefin. This allows structural characterization of the chain structure (i.e., the arrangement of monomer units) in the resulting copolymer. Further, a conjugated diene compound may be charged into the polymerization system in the presence of a non-conjugated olefin, suppressing generation of homopolymer of the conjugated diene compound. The charging of the conjugated diene compound may be performed after the initiation of the polymerization of the non-conjugated olefin.

For example, if a block copolymer is manufactured by using the second method of manufacturing the copolymer according to the present invention, it is effective to continuously charge a conjugated diene compound in the presence of a non-conjugated olefin into the polymerization system in which polymerization of the non-conjugated olefin has been initiated in advance. It is particularly effective to repeat the following operation at least twice when a multiblock copolymer is manufactured by using the second method of manufacturing the copolymer: polymerize a non-conjugated olefin in the polymerization system; and then continuously charging a conjugated diene compound into the polymerization system in the presence of the non-conjugated olefin.

The aforementioned second manufacturing method is not particularly limited as long as the way of charging monomers into a polymerization system is specified as described above, and there may be employed an arbitrary polymerization method including, for example, solution polymerization, suspension polymerization, liquid phase bulk polymerization, emulsion polymerization, vapor phase polymerization, and solid state polymerization. Further, the aforementioned second manufacturing method may be performed in a similar manner to the first manufacturing method to copolymerize a conjugated diene compound and a non-conjugated olefin as monomers, except in that the way of charging monomers into the polymerization system is specified as described above.

In the aforementioned second manufacturing method, it is necessary to control the way of charging a conjugated diene compound; specifically, it is preferred to control how much and how many times a conjugated diene compound should be charged. Methods of controlling the way of charging a conjugated diene compound include, but not limited to, computer program-based control, analog control using a timer, and so on. Further, as described above, the way of charging a conjugated diene compound is not particularly limited, including continuous charging and separate charging. In the case of separate charging of a conjugated diene compound, as for the number of times to charge the conjugated diene compound, one to five times are preferred, although not particularly limited. If the conjugated diene compound is charged too many times, it may be difficult to distinguish from a random copolymer.

Further, the aforementioned second manufacturing method requires the presence of a non-conjugated olefin in the polymerization system at the time of charging a conjugated diene compound into the polymerization system. It is thus preferred to continuously feed a non-conjugated olefin to the polymerization system. In addition, the way of feeding a non-conjugated olefin is not particularly limited.

### (Rubber Composition)

The rubber composition of the present invention is not particularly limited as long as the copolymer of the present invention is contained, and may be selected as appropriate depending on the application thereof. For example, the rubber composition preferably contains: a conjugated diene-based polymer; rubber components other than the copolymer and the conjugated diene-based polymer of the present invention; a reinforcing filler such as an inorganic filler and carbon black; a crosslinking agent; and other components.

### <Copolymer>

The content of the copolymer used in the present invention in the rubber components is not particularly limited, and may be selected as appropriate depending on the application thereof. The preferred content of the copolymer is at least 3 mass%.

The content of the copolymer in the rubber components less than 3 mass% may diminish the effect of the present invention or develop no effect at all.

### <Conjugated Diene-based Polymer>

As used herein, the conjugated diene-based polymer means a polymer that does not contain a non-conjugated olefin as a monomer unit component (as a part of the copolymer). It should be noted that the non-conjugated olefin does not include styrene.

The conjugated diene-based polymer is not particularly limited, and may be selected as appropriate depending on the application thereof. Examples thereof include natural rubber, various types of butadiene rubber, isoprene rubber, various types of styrene-butadiene copolymer rubber, styrene-isoprene copolymer rubber, styrene-isoprene-butadiene copolymer rubber, isoprene-butadiene copolymer rubber, acrylonitrile-butadiene rubber, chloroprene rubber, and so on. These rubber components may be used alone or in combination of two or more.

Among these, natural rubber is advantageous in good compatibility and better crack growth resistance.

### <Mass Ratio>

A mass ratio of the conjugated diene compound/non-conjugated olefin copolymer to the conjugated diene-based polymer is 10/90 to 90/10, and preferably 25/75 to 75/25.

If the mass ratio of the conjugated diene compound/non-conjugated olefin copolymer to the conjugated diene-based polymer is more than 90/less than 10, fracture resistant properties and workability may be insufficient, while if the mass ratio is less than 10/more than 90, weather resistance may be insufficient. Mass ratios in a more preferred range are advantageous in terms of balancing performance requirements.

### <Rubber Components>

The rubber components include the conjugated diene compound/non-conjugated olefin copolymer and the conjugated diene-based polymer, as well as other rubber components.

The other rubber components are not particularly limited, and may be selected as appropriate depending on the application thereof. Examples thereof include polysulfide rubber, silicone rubber, fluororubber, and urethane rubber. These rubber components may be used alone or in combination of two or more.

The content of the conjugated diene compound/non-conjugated olefin copolymer per 100 parts by mass of the rubber component is not particularly limited, and may be selected as appropriate depending on the application thereof. This content is preferably 10 parts by mass to 90 parts by mass, and more preferably 25 parts by mass to 75 parts by mass.
If the content of the conjugated diene compound/non-conjugated olefin copolymer per 100 parts by mass of the rubber component is less than 10 parts by mass, weather resistance may be reduced, while if the content is more than 90 parts by mass, fracture resistant properties and workability may be deteriorated.
In contrast, if the content of the conjugated diene compound/non-conjugated olefin copolymer per 100 parts by mass of the rubber component is in the above-described more preferred range, this is advantageous in terms of balancing performance requirements.

The content of the conjugated diene-based polymer per 100 parts by mass of the rubber component is not particularly limited, and may be selected as appropriate depending on the application thereof. This content is preferably 90 parts by mass to 10 parts by mass, and more preferably 75 parts by mass to 25 parts by mass.
If the content of the conjugated diene-based polymer per 100 parts by mass of the rubber component is less than 10 parts by mass, fracture resistant properties and workability may be deteriorated, while the content is more than 90 parts by mass, weather resistance may be reduced.
In contrast, if the content of the conjugated diene-based polymer per 100 parts by mass of the rubber component is in the above-described more preferred range, this is advantageous in terms of balancing performance requirements.

The rubber composition may be mixed with a reinforcing filler as necessary. Examples of the reinforcing filler include carbon black and inorganic fillers, and the reinforcing filler is preferably at least one selected from the carbon black and inorganic fillers. In this case, it is more preferable that the rubber composition includes carbon black.

The content of the reinforcing filler is not particularly limited, and may be selected as appropriate depending on the application thereof. The preferred content thereof is 5 parts by mass to 200 parts by mass per 100 parts by mass of the rubber component.
If the content of the reinforcing filler is less than 5 parts by mass, there may not be much effect attained by adding the reinforcing filler, while the content is more than 200 parts by mass, mixture of the reinforcing filler tends to fail. In either case the resulting rubber composition may have lower performance.

### <Carbon Black>

The carbon black is not particularly limited, and may be selected as appropriate depending on the application thereof. Examples thereof include FEF, GPF, SRF, HAF, N339, IISAF, ISAF, and SAF. These examples may be used alone or in combination of two or more.

The nitrogen adsorption specific surface area (N₂SA; according to JIS K6217-2:2001) of the carbon black is not particularly limited, and may be selected as appropriate depending on the application thereof. The carbon black preferably has a nitrogen adsorption specific surface area of 20 m²/g to 100 m²/g, and more preferably 35 m²/g to 80 m²/g.

If the carbon black has a nitrogen adsorption specific surface area (N₂SA) of less than 20 m²/g, the resulting rubber has lower durability, resulting in insufficient crack growth resistance. Alternatively, if the carbon black has a nitrogen adsorption specific surface area of more than 100 m²/g, low loss properties may be degraded and working efficiency may be reduced.

It should be noted that the nitrogen adsorption specific surface area (N₂SA) may be measured in accordance with, for example, JIS K6217-2:2001.

The content of the carbon black per 100 parts by mass of the rubber component is not particularly limited, and may be selected as appropriate depending on the application thereof. This content is preferably 10 parts by mass to 70 parts by mass, and more preferably 20 parts by mass to 60 parts by mass.

If the content of the carbon black is less than 10 parts by mass, the resulting rubber composition may have worse fracture resistant properties due to insufficient reinforcing performance, while the content is more than 70 parts by mass, the resulting rubber composition may have worse workability and low loss properties.

In contrast, the content of the carbon black is in the above-described more preferred range, this is advantageous in terms of balancing performance requirements.

### <Inorganic Filler>

The inorganic filler is not particularly limited, and may be selected as appropriate depending on the application thereof. Examples thereof include silica, aluminum hydroxide, clay, alumina, talc, mica, kaolin, glass balloon, glass beads, calcium carbonate, magnesium carbonate, magnesium hydroxide, calcium carbonate, magnesium oxide, titanium oxide, potassium titanate, and barium sulfate. These examples may be used alone or in combination of two or more.

In using an inorganic filler, a silane coupling agent may also be used as appropriate.

### <Crosslinking Agent>

The crosslinking agent is not particularly limited, and may be selected as appropriate depending on the application thereof. Examples thereof include a sulfur-based crosslinking agent, an organic peroxide-based crosslinking agent, an inorganic crosslinking agent, a polyamine crosslinking agent, a resin crosslinking agent, a sulfur compound-based crosslinking agent, oxime-nitrosamine-based crosslinking agent, and sulfur. Among these, preferred as a rubber composition for tires is the sulfur-based crosslinking agent.

The content of the crosslinking agent is not particularly limited, and may be selected as appropriate depending on the application thereof. The preferred content thereof is 0.1 parts by mass to 20 parts by mass per 100 parts by mass of the rubber component.
The crosslinking agent added by less than 0.1 parts by mass in content may hardly develop crosslinking, whereas the content exceeding 20 parts by mass tends to develop crosslinking by part of the crosslinking agent during the mixing, or to impair the physical property of the vulcanizate.

### <Other Components>

Other than the above, a vulcanization accelerator may also be contained. Examples of compounds that can be used as the vulcanization accelerator include: guanidine-based compounds, aldehyde-amine-based compounds, aldehyde-ammonia-based compounds, thiazole-based compounds, sulfenamide-based compounds, thiourea-based compounds, thiuram-based compounds, dethiocarbamate-based compounds, and xanthate-based compounds.

Further, if necessary, any known agent such as a reinforcing agent, a softening agent, a filler, a co-agent, a colorant, a flame retardant, a lubricant, a foaming agent, a plasticizer, a processing aid, an antioxidant, an age resister, an anti-scorch agent, an ultraviolet rays protecting agent, an antistatic agent, a color protecting agent, and other compounding agents may be used depending on the intended use thereof.

### (Crosslinked Rubber Composition)

The crosslinked rubber composition according to the present invention is not particularly limited as long as being obtained by crosslinking the rubber composition of the present invention, and may be selected as appropriate depending on the application thereof.

The conditions of the crosslinking are not particularly limited, and may be selected as appropriate depending on the application thereof. Conditions of temperature and heating time for the crosslinking may preferably be in the range of 120 °C to 200 °C for 1 minute to 900 minutes.

### (Tire)

A tire of the present invention is not particularly limited as long as being manufactured by using the rubber composition of the present invention or the crosslinked rubber composition of the present invention, and may be selected as appropriate depending on the application thereof.

The rubber composition of the present invention or the crosslinked rubber composition of the present invention may be applied, for example, to a tread, a base tread, a sidewall, a side reinforcing rubber, and a bead filler of a tire, without being limited thereto.

Among these, it is more advantageous to apply the rubber composition to a sidewall in terms of weather resistance.

The tire can be manufactured by a conventional method. For example, a carcass layer, a belt layer, a tread layer, which are composed of unvulcanized rubber, and other members used for the production of usual tires are successively laminated on a tire molding drum, then the drum is withdrawn to obtain a green tire. Thereafter, the green tire is heated and vulcanized in accordance with an ordinary method, to thereby obtain a desired tire.

### (Applications other than tires)

The rubber composition of the present invention or the crosslinked rubber composition of the present invention may be used for other applications than tires, such as anti-vibration rubber, seismic isolation rubber, a belt (conveyor belt), a rubber crawler, various types of hoses, and moran.

### EXAMPLES

In the following, the present invention will be described with reference to examples thereof. However, the present invention is no way limited to the disclosed examples.

### (Example 1)

A toluene solution of 160 mL was added to a 400 mL pressure-resistant grass reactor that had been sufficiently dried, and then ethylene was introduced thereto at 0.8 MPa. Meanwhile, in a glovebox under a nitrogen atmosphere, 28.5 µmol of bis(2-phenylindenyl)gadolinium bis(dimethylsilylamide) [(2-PhC₉H₆)₂GdN(SiHMe₂)₂], 34.2 µmol of dimethylanilinium tetrakis(pentafluorophenyl)borate [Me₂NHPhB(C₆F₅)₄], and 1.43 mmol of diisobutylaluminum hydride were provided in a glass container, which was dissolved into 8 mL of toluene, to thereby obtain a catalyst solution. After that, the catalyst solution was taken out from the glovebox and added by 28.2 µmol of gadolinium equivalent to the monomer solution, which was then subjected to polymerization at room temperature for 5 minutes. Thereafter, 100 mL of a toluene solution containing 15.23 g (0.28 mol) of 1,3 -butadiene was added while reducing the introduction pressure of ethylene at a rate of 0.2 MPa/min, and then polymerization was further performed for another 90 minutes. After the polymerization, 1 mL of an isopropanol solution containing, by 5 mass%, 2,2'-methylene-bis(4-ethyl-6-t-butylphenol) (NS-5), was added to stop the reaction. Then, a large amount of methanol was further added to isolate the copolymer, and the copolymer was vacuum dried at 70 °C to obtain Copolymer A (a block copolymer). The yield of Copolymer A thus obtained was 12.50 g.

### (Example 2)

A toluene solution of 700 mL containing 28.0 g (0.52 mol) of 1,3 -butadiene was added to a 2 L stainless reactor that had been sufficiently dried, and then ethylene was introduced thereto at 0.8 MPa. Meanwhile, in a glovebox under a nitrogen atmosphere, 400.0 µmol of dimethylaluminum(µ-dimethyl)bis(2-phenylindenyl)neodymium [(2-PhC₉H₆)₂Nd(µ-Me)₂AlMe₂] and 200.0 µmol of triphenylcarbonium tetrakis(pentafluorophenyl)borate [Ph₃CB(C₆F₅)₄] were provided in a glass container, and dissolved into 80 mL of toluene, to thereby obtain a catalyst solution. After that, the catalyst solution was taken out from the glovebox, and the catalyst solution was added by 390.0 µmol of neodymium equivalent to the monomer solution, which was then subjected to polymerization at 60 °C for 60 minutes. After the polymerization, 1 mL of an isopropanol solution containing, by 5 mass%, 2,2'-methylene-bis(4-ethyl-6-t-butylphenol) (NS-5), was added to stop the reaction. Then, a large amount of methanol was further added to isolate the copolymer, and the copolymer was vacuum dried at 70 °C to obtain Copolymer B (a random copolymer). The yield of Copolymer B thus obtained was 17.00 g.

### (Example 3)

Ethylene was introduced at 0.8 MPa into a 400 mL pressure-resistant grass reactor that had been sufficiently dried, and then 160 mL of a toluene solution containing 9.14 g (0.17 mol) of 1,3-butadiene was added thereto. Meanwhile, in a glovebox under a nitrogen atmosphere, 28.5 µmol of bis(2-phenylindenyl)gadolinium bis(dimethylsilylamide) [(2-PhC₉H₆)₂GdN(SiHMe₂)₂], 34.2 µmol of dimethylanilinium tetrakis(pentafluorophenyl)borate [Me₂NHPhB(C₆F₅)₄], and 1.43 mmol of diisobutylaluminum hydride were provided in a glass container, which was dissolved into 8 mL of toluene, to thereby obtain a catalyst solution. After that, the catalyst solution was taken out from the glovebox and added by 28.2 µmol of gadolinium equivalent to the monomer solution, which was then subjected to polymerization at room temperature for 60 minutes. Thereafter, 60 mL of a toluene solution containing 9.14 g (0.17 mol) of 1,3-butadiene was newly added at a rate of 1.0 mL/min while reducing the introduction pressure of ethylene at a rate of 0.1 MPa/min, and then polymerization was further performed for another 60 minutes. After the polymerization, 1 mL of an isopropanol solution containing, by 5 mass%, 2,2'-methylene-bis(4-ethyl-6-t-butylphenol) (NS-5), was added to stop the reaction. Then, a large amount of methanol was further added to isolate the copolymer, and the copolymer was vacuum dried at 70 °C to obtain Copolymer C. The yield of Copolymer C thus obtained was 16.30 g.

### (Comparative Example 1)

Butadiene rubber (BR01, manufactured by JSR) was prepared as a sample of a comparative example.

### (Comparative Example 2)

Based on Example 1 of JP 2000-086857 A, Copolymer D was synthesized.

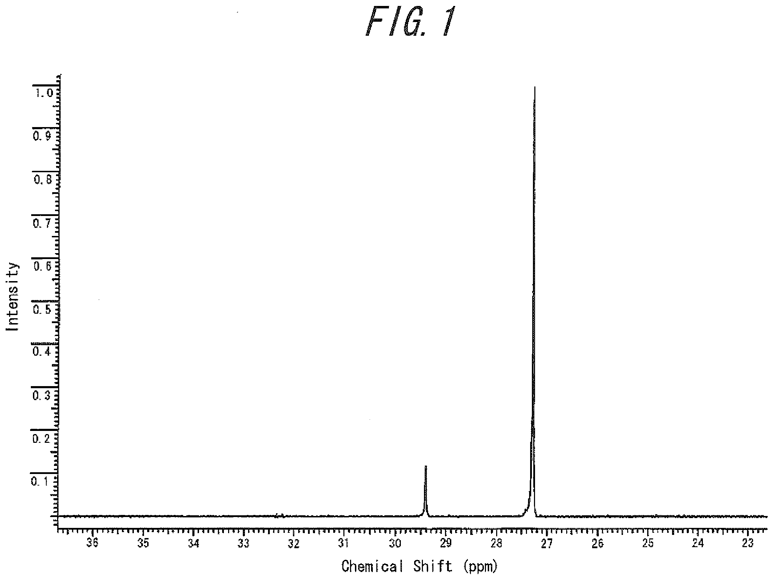

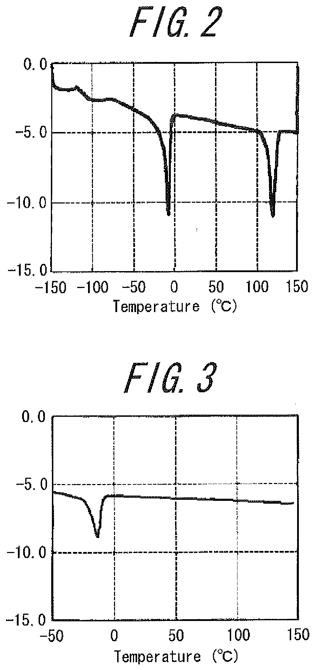

Copolymers A to C of Examples 1 to 3, butadiene rubber of Comparative Example 1, and Copolymer D of Comparative Example 2 were each subjected to measurement and evaluation by the following method so as to investigate the microstructure, the ethylene content, the weight-average molecular weight (Mw), the molecular weight distribution (Mw/Mn), and the DSC curve. FIG. 1 is a ¹³C-NMR spectrum chart of Copolymer A, FIG. 2 illustrates a DSC curve of Copolymer A, and FIG. 3 illustrates a DSC curve of Copolymer C.
The vertical axis of the DSC curve is the thermal flow.

### (1) Microstructure (1,2-vinyl bond content (Vi (%)), cis-1,4 bond content)

The microstructure (1,2-vinyl bond content) of the butadiene unit in the copolymer is determined from an integral ratio of 1,2-vinyl bond component (5.0 ppm to 5.1 ppm) to a butadiene bond component (5 ppm to 5.6 ppm) of the whole, based on ¹H-NMR spectrum (100 °C, d-tetrachloroethane standard: 6 ppm), and the microstructure (cis-1,4 bond content) of the butadiene unit in the copolymer is determined from an integral ratio of cis-1,4 bond component (26.5 ppm to 27.5 ppm) to a butadiene bond component (26.5 ppm to 27.5 ppm + 31.5 ppm to 32.5 ppm) of the whole, based on ¹³C-NMR spectrum (100 °C, d-tetrachloroethane standard: 73.8 ppm). The calculated values of the 1,2-vinyl bond content (Vi (%)) and cis-1,4 bond content (%) are shown in Table 1.

### (2) Content of Ethylene-derived Unit

The content of the ethylene unit in the copolymer (mol%) was determined from an integral ratio of an ethylene bond component (28.5 ppm to 30.0 ppm) of the whole to a butadiene bond component (26.5 ppm to 27.5 ppm + 31.5 ppm to 32.5 ppm) of the whole, based on ¹³C-NMR spectrum (100 °C, d-tetrachloroethane standard: 73.8 ppm). The content (mol%) of the ethylene-derived unit is shown in Table 1.

### (3) Weight-Average Molecular Weight (Mw) and Molecular Weight Distribution (Mw/Mn)

A polystyrene equivalent weight-average molecular weight (Mw) and a molecular weight distribution (Mw/Mn) of each copolymer were obtained through gel permeation chromatography [GPC: HLC-8121GPC/HT (manufactured by Tosoh Corporation), column: two of GMH_{HR}-H(S)HT (manufactured by Tosoh Corporation), detector: differential refractometer (RI)], using monodisperse polystyrene as a reference. The measurement temperature was 140 °C.

### (4) DSC curve

A DSC curve of each copolymer was obtained by differential scanning calorimetry (DSC) according to JIS K7121-1987. In the measurements of Copolymers A, B and D, used as samples were rubber components obtained by immersing each copolymer in a large amount of tetrahydrofuran for 48 hours so as to remove all the components dissolved in the tetrahydrofuran and then by drying the copolymer, in order to circumvent the effect to be produced by impurities such as single polymers and catalyst residues. Copolymer C was directly subjected to the measurements without any treatment.

**[Table 1]**

| | Example 1 | Example 2 | Example 3 | Comparative Example 1 | Comparative Example 2 |
|---|---|---|---|---|---|
| Copolymer Type | A | B | C | Butadiene Rubber | D |
| Mw (×10³) | 350 | 144 | 295 | 132 | 230 |
| Mw/Mn | 2.20 | 1.68 | 2.50 | 3.45 | 1.32 |
| Vi (%) | 1.2 | 2.6 | 0.8 | 1.8 | 6.0 |
| cis-1,4 bond content (%) | 98 | 89 | 98 | 97 | 92 |
| ethylene content (mol%) | 7 | 11 | 15 | 0 | 16 |

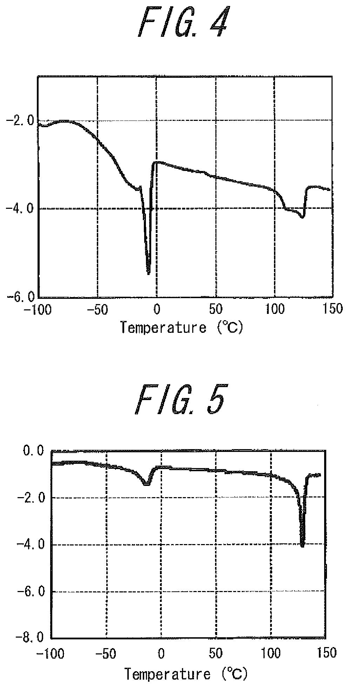

In the ¹³C-NMR spectrum chart of Copolymer A of FIG. 1, a peak which is derived from an ethylene block sequence is found at 29.4 ppm, while in the DSC curves of Copolymers A and D of FIGS. 2 and 5, by means of DSC, a crystallization temperature which is derived from a block sequence composed of a monomeric cis-unit of 1,3-butadiene can be observed near -10 °C, and a crystallization temperature which is derived from a block sequence composed of a monomeric unit of ethylene can be observed near 120-130 °C . Accordingly, it can be seen that Copolymers A and D are each a block copolymer of high cis-1,3-butadiene and ethylene.
Further, the sequence distributions of Copolymers A and D were analyzed by applying ozonolysis-GPC measurements disclosed in a document ("Polymer preprints, Japan, Vol. 42, No. 4, pp. 1347"). A polystyrene equivalent weight-average molecular weight (MW) and molecular weight distribution (Mw/Mn) of each copolymer were obtained through gel permeation chromatography [GPC: HLC-8121GPC/HT (manufactured by Tosoh Corporation), column: two of GPC HT-803 (manufactured by Showa Denko K.K.), detector: differential refractometer (RI)], using monodisperse polystyrene as a reference, at measurement temperature of 140 °C]. The result showed that the total ethylene component contained 80 mass% or more of a block ethylene component, that is, polyethylene component having a number-average molecular weight (Mn) of 1,000 or more, and that Copolymer A was identified as a block copolymer.
As shown in the DSC curve of Copolymer B of FIG. 3, by means of DSC, only a crystallization temperature which is derived from a block sequence composed of a monomeric cis-unit of 1,3-butadiene can be observed near -10 °C, while a crystallization temperature which is derived from a block sequence composed of a monomeric unit of ethylene cannot be observed.
The results of the sequence distribution analysis applying ozonolysis-GPC measurements showed that the total ethylene component contained 10 mass% or less of a block ethylene component, that is, polyethylene component having a number-average molecular weight (Mn) of 1,000 or more, and that Copolymer B was identified as a random copolymer. The DSC curve of Copolymer C of FIG. 4 shows that a broad endothermic peak was observed in a temperature range of 40 °C to 120 °C, indicating random moieties being formed which include randomly-arranged monomer units of butadiene and ethylene (including a block of low molecular weight), other than an endothermic peak in a temperature range of 120 °C or above derived from the crystallization temperature of the long-chain block sequence including monomer units of ethylene. The results of the sequence distribution analysis applying ozonolysis-GPC measurements showed that the total ethylene component contained 67 mass% of a block ethylene component, that is, polyethylene component having a number-average molecular weight (Mn) of 1,000 or more, and that Copolymer C was identified as a tapered copolymer of 1,3-butadiene and ethylene.

As Examples 1 to 3 and Comparative Examples 1 and 2, the rubber compositions formulated as shown in Table 2 were prepared, which were vulcanized at 160 °C for 20 minutes. The vulcanized rubber compositions thus obtained were subjected to measurements of low heat generation properties, heat resistance and ozone resistance (weather resistance) according to the following method.

**[Table 2]**

| | parts by mass |
|---|---|
| polymer | 100 |
| stearic acid | 2 |
| carbon black (FEF class) | 50 |
| age resistor *1 | 1 |
| zinc oxide | 3 |
| co-agent CZ-G *2 | 0.4 |
| co-agent DM-P *3 | 0.2 |
| sulfur | 1.4 |

| | |
|---|---|
| *1: N-(1,3-dimethylbutyl)-N'-p-phenylenediamine (NOCRAC 6C), manufactured by OUCHI SHINKO CHEMICAL INDUSTRIAL CO., LTD. *2: N-cyclohexyl-2-benzothiazolesulfenamide (NOCCELER CZ-G), manufactured by OUCHI SHINKO CHEMICAL INDUSTRIAL CO., LTD. *3: dibenzothiazyl disulfide (NOCCELER DM-P), manufactured by OUCHI SHINKO CHEMICAL INDUSTRIAL CO., LTD. | |

It should be noted that the above carbon black (FEF class) has N₂SA of 42m²/g.

### <Low Heat Generation Properties (Index)>

A dynamic spectrometer was used to perform measurements under conditions of tensile dynamic strain of 3%, frequency of 15 Hz and temperature of 50 °C. The results are shown in Table 3 as being indexed with a score of 100 representing the inverse of each result of Comparative Example 1. The larger index value shows better low heat generation properties (low loss properties).

### <Heat Resistance (Index)>

Sample test pieces were each caused to thermally degrade in an oven of 100 °C for 48 hours. Then, each sample taken out from the oven was subjected to tension test according to JIS K6251 at room temperature, to thereby obtain the tensile stress at 300 % strain (Md 300 %). Table 3 shows the result thereof as Md variation (%), which are indexed with a score of 100 representing Md 300 % obtained by tension test performed for samples with no thermal degradation. The smaller variation (%) shows better heat resistance.

### <Ozone Resistance (Weather Resistance) (Dynamic)>

Ozone resistance (weather resistance) was measured according to JIS K6259. Rectangular test specimens were exposed at 40 °C and ozone concentration of 50 pphm under 30 % dynamic stretching. Then, the conditions of the samples after 12 hours were visually examined (for cracks). The results thereof are shown in Table 3.

**[Table 3]**

| | Example 1 | Example 2 | Example 3 | Comparative Example 1 |
|---|---|---|---|---|
| Copolymer Type | A | B | C | D |
| Low Heat Generation Property (index) | 105 | 106 | 110 | 100 |
| Heat Resistance (index) | 140 | 144 | 134 | 158 |
| Ozone Resistance (dynamic) | no crack | no crack | no crack | fine cracks across the sample |

### (Preparation Example 1)

### Preparation of butadiene-ethylene copolymer (EBR1)

In this case, 2,000 g of a toluene solution containing 120 g (2.22 mol) of 1,3-butadiene was added to a 4 L stainless reactor that had been sufficiently dried, and then ethylene was introduced thereto at 1.72 MPa. Meanwhile, in a glovebox under a nitrogen atmosphere, 28.5 µmol of bis(2-phenylindenyl)gadolinium bis(dimethylsilylamide) [(2-PhC₉H₆)₂GdN(SiHMe₂)₂], 28.5 µmol of dimethylanilinium tetrakis(pentafluorophenyl)borate [Me₂NHPhB(C₆F₅)₄], and 2.00 mmol of diisobutylaluminum hydride were provided in a glass container, which was dissolved into 40 mL of toluene, to thereby obtain a catalyst solution. After that, the catalyst solution was taken out from the glovebox and added by 25.0 µmol of gadolinium equivalent to the monomer solution, which was then subjected to polymerization at 50 °C for 90 minutes. After the polymerization, 5 mL of an isopropanol solution containing, by 5 mass%, 2,2'-methylene-bis(4-ethyl-6-t-butylphenol) (NS-5), was added to stop the reaction. Then, a large amount of methanol was further added to isolate the copolymer, and the copolymer was vacuum dried at 70 °C to obtain a copolymer. The yield of the copolymer EBR1 thus obtained was 98 g.

### (Preparation Example 2)

### Preparation of butadiene-ethylene copolymer (EBR2)

In this case, 2,000 g of a toluene solution containing 230 g (4.26 mol) of 1,3-butadiene was added to a 4 L stainless reactor that had been sufficiently dried, and then ethylene was introduced thereto at 1.72 MPa. Meanwhile, in a glovebox under a nitrogen atmosphere, 145 µmol of bis(2-phenylindenyl)gadolinium bis(dimethylsilylamide) [(2-PhC₉H₆)₂GdN(SiHMe₂)₂], 145 µmol of dimethylanilinium tetrakis(pentafluorophenyl)borate [Me₂NHPhB(C₆F₅)₄], and 2.9 mmol of diisobutylaluminum hydride were provided in a glass container, which was dissolved into 100 mL of toluene, to thereby obtain a catalyst solution. After that, the catalyst solution was taken out from the glovebox and added by 142 µmol of gadolinium equivalent to the monomer solution, which was then subjected to polymerization at 60 °C for 60 minutes. After the polymerization, 5 mL of an isopropanol solution containing, by 5 mass%, 2,2'-methylene-bis(4-ethyl-6-t-butylphenol) (NS-5), was added to stop the reaction. Then, a large amount of methanol was further added to isolate the copolymer, and the copolymer was vacuum dried at 70 °C to obtain a copolymer. The yield of the copolymer EBR2 thus obtained was 248 g.

The ethylene-butadiene copolymers (EBR1 to EBR3) and the ethylene-propylene-butadiene copolymer (EPDM) prepared as described above, as well as a high cis-butadiene rubber (HCBR) obtained (available from JSR under the trade name of BR01) were measured and evaluated for their weight-average molecular weight (Mw), molecular weight distribution (Mw/Mn), content of ethylene-derived unit, 1,2-vinyl bond content and cis-1,4 bond content according to the above-described method, and also for their haze value in the following way. The results thereof are shown in Table 4.

### Haze Value

Each copolymer (polymer) was mixed with polyisoprene and the mixture was pressed between PET films at 100 °C. A haze meter (manufactured by Nippon Denshoku Industries Co., Ltd.) was used to measure transparency (haze value) of the obtained samples, and the measurements were used as indicator of compatibility. The results are shown in Table 4 as being indexed with a score of 100 representing the haze value of the high cis-butadiene rubber (HCBR).

**[Table 4]**

| Copolymer (Polymer) Type | EBR1 | EBR2 | HCBR |
|---|---|---|---|
| Mw (×10³) | 358 | 449 | 590 |
| Mw/Mn | 2.5 | 4.4 | 3.64 |
| Ethylene Content (mol%) | 9 | 38 | - |
| 1,2-vinyl Bond Content (%) | 0.9 | 0.9 | 2.5 |
| cis-1,4 Bond Content (%) | 98.2 | 98.3 | 96.3 |
| Haze Value (index) | 70 | 68 | 100 |

### (Examples 4 to 14 and Comparative Examples 3 to 7)

As for Examples 4 to 10 and Comparative Examples 3 to 6, the rubber compositions formulated as shown in Table 5 were prepared, which were vulcanized at 160 °C for 20 minutes. The vulcanized rubber compositions thus obtained were subjected to measurements of weather resistance, crack growth resistance (index) and low loss properties (index) according to the following method.

As for Examples 11 to 14 and Comparative Example 7, the rubber compositions formulated as shown in Table 6 were prepared, which were vulcanized at 160 °C for 20 minutes. The vulcanized rubber compositions thus obtained were subjected to measurements of crack growth resistance (index) according to the following method.

It should be noted that the compounds shown in "Master Batch" in Tables 5 and 6 were added to prepare master batches, to which the compounds shown in "Final Batch" were then added to prepare final batches.

### <Weather Resistance (Ozone Resistance)>

Weather resistance (ozone resistance) was measured according to JIS K6259. Rectangular test specimens were exposed at 40 °C and ozone concentration of 50 pphm under 30 % dynamic stretching. Then, the conditions of the samples after 24 hours were visually examined (for cracks). The results thereof are shown in Tables 7 and 8. In Tables 7 and 8, "Good" indicates "absence of cracks" and "Poor" signifies "presence of cracks."

### <Crack Growth Resistance (Constant Strain)>

A 0.5-mm crack was given at the central portion of each JIS No. 3 test specimen. Then, fatigue was repetitively applied to each sample at room temperature under a constant strain of 0 % to 100 %, and the number of times it took to rupture the sample by applying the repetitive fatigue was counted for each sample. The results are shown as being indexed with a score of 100 representing the result of Comparative Example 6 in Tables 7 and 8 and the result of Comparative Example 7 in Table 9. The larger index value shows better crack growth resistance (constant strain).

### <Low Loss Properties (Low Heat Generation Properties) (Index)>

A dynamic spectrometer (manufactured by Rheometrics, Inc. (US)) was used to perform measurements under the conditions of tensile dynamic strain of 3%, frequency of 15 Hz and temperature of 50 °C. In Tables 7 and 8, the results are shown as being indexed with a score of 100 representing the result of Comparative Example 6. The larger index value shows better low loss properties (low heat generation properties).

**[Table 5]**

| | | |
|---|---|---|
| Master Batch | copolymer (polymer) (part of rubber composition) | 50.0 parts by mass |
| | natural rubber (NR) ^{*1} (part of rubber composition) | 50.0 parts by mass |
| | carbon black ^{*2} | 50.0 parts by mass |
| | stearic acid | 2.0 parts by mass |
| | age resistor 6C ^{*3} | 0.5 parts by mass |
| | softening agent ^{*4} | 4.0 parts by mass |
| Final Batch | zinc oxide | 3.0 parts by mass |
| | age resistor Crack 224 ^{*5} | 1.0 parts by mass |
| | co-agent CZ-G ^{*6} | 0.4 parts by mass |
| | co-agent DM-P ^{*7} | 0.2 parts by mass |
| | sulfur | 1.4 parts by mass |

**[Table 6]**

| | | |
|---|---|---|
| Master Batch | rubber component (polymer) | 100.0 parts by mass |
| | carbon black ^{*2} | 50.0 parts by mass |
| | stearic acid | 2.0 parts by mass |
| | age resistor 6C ^{*3} | 0.5 parts by mass |
| | softening agent ^{*4} | 4.0 parts by mass |
| Final Batch | zinc oxide | 3.0 parts by mass |
| | age resistor Crack 224 ^{*5} | 1.0 parts by mass |
| | co-agent CZ-G ^{*6} | 0.4 parts by mass |
| | co-agent DM-P ^{*7} | 0.2 parts by mass |
| | sulfur | 1.4 parts by mass |

Used as the compounds *1 to *7 in Tables 5 and 6 were:

| | |
|---|---|
| *1: | RSS #3 |
| *2: | Carbon black with N₂SA |
| | The respective measurements of nitrogen adsorption specific surface area (N₂SA) of the carbon black samples used are shown in Tables 7 to 9. It should be noted that the nitrogen adsorption specific |
| | surface area (N₂SA) was measured in accordance with JIS K6217-2:2001. |
| *3: | N-(1,3-dimethylbutyl)-N'-p-phenylenediamine (NOCRAC 6C), manufactured by OUCHI SHINKO CHEMICAL INDUSTRIAL CO., LTD. |
| *4: | A mixed resin of C5 and C9 petroleum resins |
| *5: | 2,2,4-trimethyl-N'-phenyl-p-phenylenediamine |
| *6: | N-cyclohexyl-2-benzothiazolesulfenamide (NOCCELER CZ-G), manufactured by OUCHI SHINKO CHEMICAL INDUSTRIAL CO., LTD. |
| *7: | Dibenzothiazyl disulfide (NOCCELER DM-P), manufactured by OUCHI SHINKO CHEMICAL INDUSTRIAL CO., LTD. |

**[Table 7]**

| | Example 4 | Example 5 | Example 6 | Example 7 | Example 8 | Example 9 | Example 10 |
|---|---|---|---|---|---|---|---|
| Copolymer (Polymer) | EBR1 | EBR2 | EBR1 | EBR2 | EBR1 | EBR2 | EBR1 |
| N₂SA of Carbon Black (m²/g) | 34 | 48 | 29 | 29 | 78 | 78 | 105 |
| Weather Resistance | Good | Good | Good | Good | Good | Good | Good |
| Crack Growth Resistance (index) | 293 | 265 | 221 | 207 | 303 | 275 | 320 |
| Low Loss Property (index) | 99 | 97 | 114 | 115 | 83 | 82 | 79 |

**[Table 8]**

| | Comparative Example 6 |
|---|---|
| Copolymer (Polymer) | HCBR |
| N₂SA of Carbon Black (m²/g) | 42 |
| Weather Resistance | Fair |
| Crack Growth Resistance (index) | 100 |
| Low Loss Property (index) | 100 |

**[Table 9]**

| | Example 11 | Example 12 | Example 13 | Example 14 | Comparative Example 7 |
|---|---|---|---|---|---|
| Content of natural rubber (NR) per 100 parts by mass of rubber composition (parts by mass) | 70 | 50 | 10 | 40 | 50 |
| Content of butadiene rubber (BR01 by JSR) per 100 parts by mass of rubber composition (parts by mass) | 0 | 0 | 0 | 30 | 50 |
| Content of prepared EBR1 per 100 parts by mass of rubber composition (parts by mass) | 30 | 50 | 90 | 30 | 0 |
| N₂SA of Carbon Black (m²/g) | 42 | 42 | 42 | 42 | 42 |
| Crack Growth Resistance (index) | 195 | 265 | 332 | 187 | 100 |

It can be seen from Tables 7 to 9 that each rubber composition containing a conjugated diene compound/non-conjugated olefin copolymer and a conjugated diene-based polymer, in which the content of 1,2 adduct units (including 3,4 adduct units) of the conjugated diene compound is 5 % or less, may improve weather resistance, crack growth resistance and low loss properties in a balanced manner.
From Tables 7 to 9, it will also be appreciated that sufficient crack growth resistance cannot be obtained where the content of 1,2 adduct units (including 3,4 adduct units) of the conjugated diene compound is more than 5 %.

### INDUSTRIAL APPLICABILITY

The copolymer of the present invention can be used generally for elastomer products, in particular, tire sidewall members.

## Claims

1. A rubber composition comprising:
a copolymer of a conjugated diene compound and a non-conjugated olefin, wherein the content of 1,2 adduct units (including 3,4 adduct units) of a unit derived from the conjugated diene compound is 5 % or less, and the non-conjugated olefin is at least one selected from the group consisting of ethylene, propylene, and 1-butene; and
a conjugated diene-based polymer,
wherein the conjugated diene-based polymer means a polymer that does not contain a non-conjugated olefin as a monomer unit component,
the content of 1,2 adduct units (including 3,4 adduct units) is determined through ¹H-NMR spectroscopy, and
a mass ratio of the copolymer of a conjugated diene compound and a non-conjugated olefin to the conjugated diene-based polymer is 10/90 to 90/10.

2. The rubber composition according to claim 1, wherein the unit derived from the conjugated diene compound has a cis-1,4 bond content of more than 50 mol%, and the cis-1,4 bond content is determined through ¹³C-NMR spectroscopy.

3. The rubber composition according to claim 1, wherein the content of a unit derived from the non-conjugated olefin is greater than 0 mol% and not more than 50 mol%.

4. The rubber composition according to claim 1, wherein the copolymer has a polystyrene-equivalent average-weight molecular weight of 10,000 to 10,000,000, and the polystyrene weight-average molecular weight is determined through gel permeation chromatography using monodisperse polystyrene as a reference.

5. The rubber composition according to claim 1, wherein the non-conjugated olefin is ethylene.

6. The rubber composition according to claim 1, wherein the conjugated diene compound is at least one selected from the group consisting of 1,3-butadiene and isoprene.

7. The rubber composition according to claim 1, wherein the content of 1,2 adduct units (including 3,4 adduct units) of a unit derived from the conjugated diene compound is 3% or less.

8. The rubber composition according to claim 7, wherein the content of 1,2 adduct units (including 3,4 adduct units) of a unit derived from the conjugated diene compound is 2% or less.

9. The rubber composition according to claim 1 further comprising carbon black, wherein the carbon black has a nitrogen adsorption specific surface area (N₂SA) of 20 m²/g to 100 m²/g, and the nitrogen adsorption surface area (N₂SA) is determined in accordance with JIS K6217-2:2001.

10. The rubber composition according to claim 9, wherein the content of the carbon black is 10 parts by mass to 70 parts by mass per 100 parts by mass of the rubber component.

11. The rubber composition according to claim 1, wherein the conjugated diene-based polymer is natural rubber.

12. The rubber composition according to claim 11, wherein the content of the natural rubber per 100 parts by mass of the rubber component is at least 10 parts by mass.

13. The rubber composition according to claim 1 further comprising a crosslinking agent by 0.1 parts by mass to 20 parts by mass per 100 parts by mass of the rubber component.

14. The rubber composition according to claim 1, wherein the content of the conjugated diene compound/non-conjugated olefin copolymer per 100 parts by mass of the rubber component is 25 parts by mass to 75 parts by mass.

15. The rubber composition according to claim 1, wherein the content of the conjugated diene-based polymer per 100 parts by mass of the rubber component is 75 parts by mass to 25 parts by mass.

16. The rubber composition according to claim 9, wherein the carbon black has a nitrogen adsorption specific surface area (N₂SA) of 35 m²/g to 80 m²/g.

17. A crosslinked rubber composition obtained by crosslinking the rubber composition according to claim 1.

18. A tire manufactured by using the rubber composition according to claim 1 or the crosslinked rubber composition according to claim 17.

19. A tire according to claim 18, wherein the crosslinked rubber composition is applied to at least one selected from the group consisting of a tread, a base tread, a sidewall, a side reinforcing rubber, and a bead filler.

## Patentansprüche

1. Kautschukzusammensetzung, umfassend:
ein Copolymer aus einer konjugierten Dienverbindung und einem nicht-konjugierten Olefin, wobei der Gehalt an 1,2-Addukteinheiten (einschließlich 3,4-Addukteinheiten) einer von der konjugierten Dienverbindung abgeleiteten Einheit 5 % oder weniger beträgt, und das nicht-konjugierte Olefin zumindest eines ist, ausgewählt aus der Gruppe bestehend aus Ethylen, Propylen und 1-Buten; und
ein konjugiertes Polymer auf Dien-Basis,
wobei das konjugierte Polymer auf Dien-Basis ein Polymer bedeutet, welches kein nicht-konjugiertes Olefin als eine Monomereinheit-Komponente enthält,
der Gehalt an 1,2-Addukteinheiten (einschließlich 3,4-Addukteinheiten) mittels ¹H-NMR-Spektroskopie bestimmt wird, und
ein Massenverhältnis des Copolymers einer konjugierten Dienverbindung und eines nicht-konjugierten Olefins zum konjugierten Polymer auf Dien-Basis 10/90 bis 90/10 beträgt.

2. Kautschukzusammensetzung nach Anspruch 1, wobei die aus der konjugierten Dienverbindung abgeleitete Einheit einen cis-1,4-Bindungsgehalt von mehr als 50 Mol-% aufweist, und der cis-1,4-Bindungsgehalt mittels ¹³C-NMR-Spektroskopie bestimmt wird.

3. Kautschukzusammensetzung nach Anspruch 1, wobei der Gehalt einer aus dem nicht-konjugierten Olefin abgeleiteten Einheit größer als 0 Mol-% und höchstens 50 Mol-% ist.

4. Kautschukzusammensetzung nach Anspruch 1, wobei das Copolymer ein Polystyrol-äquivalentes durchschnittliches Molekulargewischt von 10.000 bis 10.000.000 aufweist und das durchschnittliche Molekulargewicht des Polystyrols durch Gelchromatographie unter Verwendung von monodispersem Polystyrol als eine Referenz bestimmt wird.

5. Kautschukzusammensetzung nach Anspruch 1, wobei das nicht-konjugierte Olefin Ethylen ist.

6. Kautschukzusammensetzung nach Anspruch 1, wobei die konjugierte Dienverbindung zumindest zumindest eines ist, ausgewählt aus der Gruppe bestehend aus 1,3-Butadien und Isopren.

7. Kautschukzusammensetzung nach Anspruch 1, wobei der Gehalt an 1,2-Addukteinheiten (einschließlich 3,4-Addukteinheiten) einer von der konjugierten Dienverbindung abgeleiteten Einheit 3 % oder weniger beträgt.

8. Kautschukzusammensetzung nach Anspruch 7, wobei der Gehalt an 1,2-Addukteinheiten (einschließlich 3,4-Addukteinheiten) einer von der konjugierten Dienverbindung abgeleiteten Einheit 2 % oder weniger beträgt.

9. Kautschukzusammensetzung nach Anspruch 1, weiter umfassend Ruß, wobei der Ruß eine spezifische Stickstoffadsorptionsoberfläche (N₂SA) von 20 m²/g bis 100 m²/g aufweist, und die Stickstoffadsorptionsoberfläche (N₂SA) gemäß JIS K6217-2:2001 bestimmt wird.

10. Kautschukzusammensetzung nach Anspruch 9, wobei der Gehalt an Ruß 10 Massenteile bis 70 Massenteile pro 100 Massenteile der Kautschukkomponente beträgt.

11. Kautschukzusammensetzung nach Anspruch 1, wobei das konjugierte Polymer auf Dien-Basis Naturkautschuk ist.

12. Kautschukzusammensetzung nach Anspruch 11, wobei der Gehalt an Naturkautschuk pro 100 Massenteile der Kautschukkomponente zumindest 10 Massenteile beträgt.

13. Kautschukzusammensetzung nach Anspruch 1, weiter umfassend ein Vernetzungsmittel in einer Menge von 0,1 Massenteile bis 20 Massenteile pro 100 Massenteile der Kautschukkomponente.

14. Kautschukzusammensetzung nach Anspruch 1, wobei der Gehalt an konjugierter Dienverbindung /nicht-konjugiertem Olefin-Copolymer pro 100 Massenteile der Kautschukkomponente 25 Massenteile bis 75 Massenteile beträgt.

15. Kautschukzusammensetzung nach Anspruch 1, wobei der Gehalt an konjugiertem Polymer auf Dien-Basis pro 100 Massenteile der Kautschukkomponente 75 Massenteile bis 25 Massenteile beträgt.

16. Kautschukzusammensetzung nach Anspruch 9, wobei der Ruß eine spezifische Stickstoffadsorptionsoberfläche (N₂SA) von 35 m²/g bis 80 m²/g aufweist.

17. Vernetzte Kautschukzusammensetzung, welche durch Vernetzung der Kautschukzusammensetzung nach Anspruch 1 erhalten wird.

18. Reifen, welcher unter Verwendung der Kautschukzusammensetzung nach Anspruch 1 oder der vernetzten Kautschukzusammensetzung nach Anspruch 17 hergestellt wird.

19. Reifen nach Anspruch 18, wobei die vernetzte Kautschukzusammensetzung auf zumindest eines aufgetragen ist, welches aus der Gruppe bestehend aus einer Lauffläche, einer Basisschicht der Lauffläche, einer Seitenwand, einem Seitenverstärkungsgummi und einem Wulstfüller ausgewählt ist.

## Revendications

1. Composition de caoutchouc comprenant :
un copolymère d'un composé diénique conjugué et d'une oléfine non conjuguée, dans laquelle la teneur en unités adduites 1,2 (incluant des unités adduites 3,4) d'une unité dérivée du composé diénique conjugué est de 5 % ou moins, et l'oléfine non conjuguée est au moins sélectionnée à partir du groupe constitué d'éthylène, propylène et 1-butène ; et
un polymère à base de diène conjugué,
dans lequel le polymère à base de diène conjugué désigne un polymère qui ne contient pas d'oléfine non conjuguée comme composant d'unité monomère,
la teneur en unités adduites 1,2 (incluant des unités adduites 3,4) est déterminée par spectroscopie RMN ¹H, et
un rapport massique du copolymère d'un composé diénique conjugué et d'une oléfine non conjuguée au polymère à base de diène conjugué est de 10/90 à 90/10.

2. Composition de caoutchouc selon la revendication 1, dans laquelle l'unité dérivée du composé diénique conjugué présente une teneur en liaisons cis-1,4 supérieure à 50 % en moles, et la teneur en liaisons cis-1,4 est déterminée par spectroscopie RMN ¹³C.

3. Composition de caoutchouc selon la revendication 1, dans laquelle la teneur en une unité dérivée de l'oléfine non conjuguée est supérieure à 0 % en moles et inférieure ou égale à 50 % en moles.

4. Composition de caoutchouc selon la revendication 1, dans laquelle le copolymère présente un poids moléculaire moyen équivalent polystyrène de 10 000 à 10 000 000, et le poids moléculaire moyen du polystyrène est déterminé par chromatographie de perméation de gel en utilisant du polystyrène monodispersé comme référence.

5. Composition de caoutchouc selon la revendication 1, dans laquelle l'oléfine non conjuguée est de l'éthylène.

6. Composition de caoutchouc selon la revendication 1, dans laquelle le composé diénique conjugué est au moins un composé sélectionné à partir du groupe constitué de 1,3-butadiène et d'isoprène.

7. Composition de caoutchouc selon la revendication 1, dans laquelle la teneur en unités adduites 1,2 (incluant des unités adduites 3,4) d'une unité dérivée du composé diène conjugué est de 3 % ou moins.

8. Composition de caoutchouc selon la revendication 7, dans laquelle la teneur en unités adduites 1,2 (incluant des unités adduites 3,4) d'une unité dérivée du composé diène conjugué est de 2 % ou moins.

9. Composition de caoutchouc selon la revendication 1 comprenant en outre du noir de carbone, dans lequel le noir de carbone présente une superficie spécifique d'adsorption d'azote (N₂SA) de 20 m²/g à 100 m²/g, et la superficie d'adsorption d'azote (N₂SA) est déterminée conformément à la norme JIS K6217-2:2001.

10. Composition de caoutchouc selon la revendication 9, dans laquelle la teneur en noir de carbone est de 10 parties en masse à 70 parties en masse pour 100 parties en masse du composant de caoutchouc.

11. Composition de caoutchouc selon la revendication 1, dans laquelle le polymère à base de diène conjugué est du caoutchouc naturel.

12. Composition de caoutchouc selon la revendication 11, dans laquelle la teneur en caoutchouc naturel pour 100 parties en masse du composant en caoutchouc est d'au moins 10 parties en masse.

13. Composition de caoutchouc selon la revendication 1, comprenant en outre un agent de réticulation à raison de 0,1 partie en masse à 20 parties en masse pour 100 parties en masse du composant de caoutchouc.

14. Composition de caoutchouc selon la revendication 1, dans laquelle la teneur en copolymère de composé diénique conjugué/oléfine non conjuguée pour 100 parties en masse du composant caoutchouc est de 25 parties en masse à 75 parties en masse.

15. Composition de caoutchouc selon la revendication 1, dans laquelle la teneur en polymère à base de diène conjugué pour 100 parties en masse du composant de caoutchouc est de 75 parties en masse à 25 parties en masse.

16. Composition de caoutchouc selon la revendication 9, dans laquelle le noir de carbone présente une superficie spécifique d'adsorption d'azote (N₂SA) de 35 m²/g à *80* m²/g.

17. Composition de caoutchouc réticulé obtenue par réticulation de la composition de caoutchouc selon la revendication 1.

18. Pneu fabriqué en utilisant la composition de caoutchouc selon la revendication 1 ou la composition de caoutchouc réticulé selon la revendication 17.

19. Pneu selon la revendication 18, dans lequel la composition de caoutchouc réticulé est appliquée à au moins un élément sélectionné à partir du groupe constitué par une bande de roulement, une bande de roulement de base, un flanc, un caoutchouc de renforcement latéral et un remplissage de talon.
